# EUROPEAN PATENT APPLICATION

(11) **EP 2 628 776 A1**
(43) Date of publication of application: **21.08.2013**
(21) Application number: 13154617.8
(22) Date of filing: 08.02.2013
(51) Int. Cl.: C09D 11/00

(54) **Inkjet ink composition, image forming method, and printed article**

(30) Priority: 16.02.2012 JP 2012032060
(71) Applicant: Fujifilm Corporation, Minato-ku Tokyo (JP)
(72) Inventor: Takeda, Akira, Ashigarakami-gun 258-8577 (JP)
(74) Representative: Morpeth, Fraser Forrest

(57) **Abstract**

Provided is an inkjet ink composition, which forms an image having an excellent blocking resistance, and particularly which forms an image having an excellent blocking resistance in a case where images come into contact with one another overlapped, an image forming method using the ink composition and a printed article with the image having the excellent blocking resistance.

The inkjet ink composition contains an aqueous medium, latex particles, and a polymer compound which contains a fluorine-substituted hydrocarbon group and has a weight average molecular weight of 2,000 to 200,000, wherein the content of the polymer compound may be 0.1% by mass to 10% by mass, based on the total mass of the ink composition.

## Description

### BACKGROUND OF THE INVENTION

1. Field of the Invention

The present invention relates to an inkjet ink composition, an image forming method using the ink composition, and a printed article including an image formed by the ink composition.

2. Description of the Related Art

As an image recording method for forming an image on a recording medium such as paper based on image data signals, there is an inkjet recording method. The inkjet recording method is a recording method in which a liquid ink composition is ejected to a recording medium from a nozzle using pressure, heat, an electric field or the like as a driving source so as to perform recording. Since the running costs are low and a high quality image can be obtained, recently, the inkjet recording method has rapidly come into widespread use.

Among ink compositions used for recording an image by the inkjet recording method, an aqueous ink composition, which is curable by irradiation with active energy rays, is preferably used for a pre-treatment to print an image and apply printing suitability to a recording medium, a post-treatment to perform the protection or decoration of the printed image, or the like. Further, since the major component of the aqueous ink composition is water, the aqueous ink composition is excellent in regard to safety. Therefore, this technology has many excellent characteristics and possibilities such as its possible application to high density inkjet recording using low viscosity ink.

With respect to the aqueous ink composition, there are some cases where fine particles of a polymer compound are added thereto in order to improve the density of the image formed by the aqueous ink composition, or the like. For example, an aqueous ink for an inkjet recording containing a self-dispersible pigment, polymer particles, and a compound having a polysiloxane skeleton has been disclosed (for example, refer to JP2007-154021A).

### SUMMARY OF THE INVENTION

However, the aqueous ink composition of the related art as described above is not sufficient from the viewpoint of forming an image having an excellent blocking resistance. Particularly, with respect to a printed article, there are cases where after forming an image, image formation surfaces are stored in an overlapped state or cutting is performed, and pressure is further applied to the image formation surfaces in a state where the image formation surfaces overlap each other. However, in this case, the aqueous ink composition, which is capable of forming an image with an excellent blocking resistance, has not been provided.

The present invention has been made in view of the above-described circumstance, and an object thereof is to provide an inkjet ink composition, which forms an image having an excellent blocking resistance, and particularly which forms an image having an excellent blocking resistance in a case where images come into contact with one another overlapped, an image forming method using the ink composition and a printed article with the image having the excellent blocking resistance.

Detailed means for solving the problem is as follows.

<1> An inkjet ink composition contains an aqueous medium, polymer particles, and a polymer compound which contains a fluorine-substituted hydrocarbon group and has a weight average molecular weight of 2,000 to 200,000, wherein the content of the polymer compound may be 0.1% by mass to 10% by mass based on the total mass of the ink composition.

<2> In the inkjet ink composition according to <1>, the fluorine-substituted hydrocarbon group in the polymer compound may be a fluoroalkyl or perfluoroalkyl group having 1 to 20 carbon atoms.

<3> In the inkjet ink composition according to <1> or <2>, the polymer compound may contain a repeating unit derived from a monomer represented by the general formula (1) below.

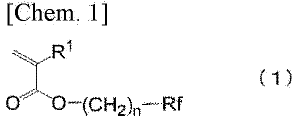

In the general formula (1), Rf represents a fluoroalkyl or perfluoroalkyl group having 2 to 20 carbon atoms, n represents 1 or 2 and R¹ represents a hydrogen atom or a methyl group.

<4> In the inkjet ink composition according to any one of <1> to <3>, the polymer compound may contain a repeating unit derived from a monomer having at least one kind of hydrophilic groups selected from -CO₂H, -CO₂-, -CONH₂, -SO₂OH, -SO₂O⁻, -PO₃H, -P(O)(OH)(O⁻), -P(O)(O⁻)₂, -OH and -NH₃⁺.

<5> In the inkjet ink composition according to any one of <1> to <4>, the polymer compound may contain a repeating unit derived from a monomer represented by the general formula (2) below.

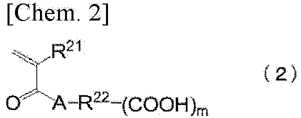

In the general formula (2), R²¹ represents a hydrogen atom or a methyl group, R²² represents an (m+1)-valent hydrocarbon group including an aliphatic ring structure having 3 to 30 carbon atoms which may have a substituent, and one or more arbitrary carbon atoms in the hydrocarbon group may be substituted with a hetero atom selected from a nitrogen atom, an oxygen atom and a sulfur atom, or -C(=O)-. A represents an oxygen atom or -NR²³-, R²³ represents a hydrogen atom or a monovalent hydrocarbon group having 1 to 10 carbon atoms, and m represents an integer of 1 to 5.

<6> The inkjet ink composition according to any one of <1> to <5> may further contain a colorant.

<7> An image forming method includes an ink application step of applying the ink composition according to any one of <1> to <6> onto a recording medium and a drying step of reducing an aqueous medium which is contained in the ink composition applied onto the recording medium.

<8> A printed article includes an image which is formed on a recording medium with the ink composition according to any one of <1> to <6> or which is formed on the recording medium by the image forming method according to <7>.

According to the present invention, it is possible to provide an inkjet ink composition, which forms an image having an excellent blocking resistance, and particularly which forms an image having an excellent blocking resistance in a case where images come into contact with one another overlapped, an image forming method using the ink composition and a printed article with the image having the excellent blocking resistance.

### DESCRIPTION OF THE PREFERRED EMBODIMENTS

Hereinafter, the present invention will be described in detail.

Here, in the present specification, numerical ranges represented by using "to" means the ranges including the numerical values described before and after "to" as a lower limit value and an upper limit value.

In the present specification, when an amount of each component in the composition is described if there are a plurality of substances corresponding to each component in the composition, the amount means the total amount of the plurality of substances in the composition as long as it is not explicitly stated otherwise.

In the present specification, the term "step" includes a case where it is difficult to discriminate a step from another step, as long as a desired action of the step can be achieved, in addition to an independent step.

In addition, the weight average molecular weight in the present specification is measured by gel permeation chromatography (GPC). The GPC used an HLC-8020 GPC (manufactured by Tosoh Corporation), used three columns of TSKgel SuperHZM-H, TSKgel SuperHZ4000 and TSKgel SuperHZ200 (manufactured by Tosoh Corporation, 4.6 mmID x 15 cm) as columns, and used THF (tetrahydrofuran) as an eluent.

[Ink composition]

The inkjet ink composition of the present invention contains an aqueous medium, polymer particles, and a polymer compound which contains a fluorine-substituted hydrocarbon group and has a weight average molecular weight of 2,000 to 200,000. The content of the polymer compound may be 0.1% by mass to 10% by mass based on the total mass of the ink composition.

Hereinafter, the inkjet ink composition of the present invention is appropriately referred to as "the ink composition of the present invention". Furthermore, the polymer compound which contains a fluorine-substituted hydrocarbon group and has a weight average molecular weight of 2,000 to 200,000 is appropriately referred to as a "specific polymer compound".

The ink composition of the present invention contains each component described above. Therefore, an image having an excellent blocking resistance can be formed. Particularly, the image formed by the ink composition of the present invention exerts the excellent blocking resistance in a case where the images come into contact with one another overlapped.

Here, in the present invention, the blocking resistance of the image means a case where undesired adhesion or transfer of the image to an adjacent printed article is suppressed, in a case where a printed article in which the image is formed on a recording medium is stored in an overlapping manner.

Moreover, in the present invention, similarly at the time of cutting, when the printed articles in which the image is formed on the recording medium overlap each other and a large weight is applied to the printed article in a short time, a case where undesired adhesion or transfer of the image to an adjacent printed article is suppressed is particularly referred to as "press blocking resistance".

Although the mechanism of the present invention has not been made clear yet, the inventors presume the mechanism thereof to be as follows.

That is, the ink composition of the present invention, which contains an aqueous medium, polymer particles and 0.1% by mass to 10% by mass of a specific polymer compound, is applied onto the recording medium by an inkjet nozzle and then the aqueous medium is reduced by drying, thereby forming an image. At this time, there is a case where the specific polymer compound is segregated at a surface of an image portion (hereinafter, referred to as "surface segregation" in some cases). Therefore, it is considered that a polymer compound layer having a low surface energy is formed in such a manner that the fluorine-substituted hydrocarbon group contained in the specific polymer compound is aligned in the surface of the image portion and in the vicinity thereof. As a result, it is presumed that although the ink composition of the present invention contains the polymer particles, stickiness of the image portion formed by the ink composition is suppressed, thereby improving the blocking resistance.

The ink composition of the present invention may further contain various liquid or solid compounds as an additive, as necessary, without interfering with the effect of the present invention.

Hereinafter, the inkjet ink composition of the present invention will be described in detail.

<Aqueous medium>

The ink composition of the present invention contains an aqueous medium.

The aqueous medium according to the present invention includes at least water, and may further include a water-soluble organic solvent, as necessary.

- Water -

In the ink composition of the present invention, ion exchanged water or distilled water not containing impurities is preferably used as the water included in the aqueous medium.

The content of the water in the ink composition of the present invention is preferably 10% by mass to 97% by mass, more preferably 30% by mass to 95% by mass, and still more preferably 50% by mass to 85% by mass.

- Water-soluble organic solvent -

The ink composition of the present invention may contain one or two or more types of the water-soluble organic solvents as the aqueous medium. Herein, the water-soluble organic solvent is an organic solvent of which the solubility with respect to water at 25°C is 10% by mass or more. By containing the water-soluble organic solvent, it is possible to obtain an effect of preventing dryness and enhancing moistness or penetration of the recording medium such as paper.

Examples of the water-soluble organic solvent used in the present invention are as follows.

· Alcohols (for example, methanol, ethanol, propanol, isopropanol, butanol, isobutanol, sec-butanol, tert-butanol, pentanol, hexanol, cyclohexanol and benzyl alcohol),

· Polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol and 2-methylpropanediol),

· Polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropyleneglycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether and propylene glycol monophenyl ether),

· Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethylenimine, pentamethyldiethylenetriamine, tetramethylpropylenediamine),

· Amides (for example, formamide, N,N-dimethylformamide and N,N-dimethylacetamide),

· Heterocyclic compounds (for example, 2-pyrrolidone, N-methyl-2-pyrrolidone, cyclohexyl pyrrolidone, 2-oxazolidone, 1,3-dimethyl-2-imidazolidinone, γ-butyrolactone, propylene carbonate, ethylene carbonate and ethylene urea),

· Sulfoxides (for example, dimethylsulfoxide),

· Sulfones (for example, sulfolane),

· Others (urea, acetonitrile, acetone or the like).

Preferred examples of the water-soluble organic solvent include polyhydric alcohol ethers and heterocyclic compounds and it is also preferable that these may be used concurrently.

As the polyhydric alcohol ethers, so-called glycol ethers are preferable. Specifically, tripropyleneglycol monomethyl ether, dipropylene glycol monomethyl ether and dipropylen glycol dimethyl ether are preferable and dipropylene glycol monomethyl ether is more preferable.

As the heterocyclic compounds, 2-pyrrolidone, γ-butyrolactone, propylene carbonate, ethylene urea or the like is preferable and 2-pyrrolidone and γ-butyrolactone are particularly preferable.

Particularly, a solvent having a high boiling point may be preferably used. The boiling point of the solvent is preferably 120°C or higher and is more preferably 150°C or higher, at normal pressures.

The content of the water-soluble organic solvent in the ink composition is preferably 1% by mass to 60% by mass and more preferably 2% by mass to 35% by mass, based on the total mass of the ink composition.

<Polymer particles>

The ink composition of the present invention contains polymer particles.

By containing the polymer particles, it is possible to enhance fixing property and abrasion resistance of the image formed by the ink composition of the present invention.

Examples of resin composing the polymer particles according to the present invention include acrylic resin, vinyl acetate resin, styrene-butadiene resin, vinyl chloride resin, acrylic-styrene resin, butadiene resin, styrene resin, crosslinked acrylic resin, crosslinked styrene resin, benzoguanamine resin, phenolic resin, silicone resin, epoxy resin, urethane resin, paraffin resin, fluorine-based resin. As preferable examples, acrylic resin, acrylic-styrene resin, styrene resin, crosslinked acrylic resin and crosslinked styrene resin can be exemplified.

The polymer particles according to the present invention may also be in an aqueous emulsified dispersion, so-called latex form.

If the polymer particles according to the present invention are used in latex form, the polymer particles may be the one dispersed by an emulsifier or may be so-called soap-free latex particles that are dispersed without using the emulsifier. As the emulsifier, a surfactant may be used in many cases but a polymer having a water-soluble group, such as a sulfonate group or a carboxylic group (for example, a polymer where a water-soluble group is bound by grafting or a polymer obtained from a monomer having a water-soluble group and a monomer having a water-insoluble moiety) may be preferably used.

The weight average molecular weight of resin composing the polymer particles is preferably 10,000 to 300,000 and more preferably 10,000 to 100,000.

The volume average particle size of the polymer particles is preferably in a range of 1 nm to 300nm, more preferably in a range of 100 nm to 250 nm, particularly preferably in a range of 100 nm to 200 nm.

The volume average particle size of the polymer particles can be obtained by a commercially available particle size measuring instrument using a light scattering method, an electrophoresis method or a laser Doppler method. The volume average particle size of the latex particles according to the present invention is measured by the particle size measurement such as a dynamic light scattering method.

The particle size distribution of the polymer particles is not particularly limited but any one of a large particle size distribution and a monodispersed particle size distribution of the polymer particles may be used. Two or more resin particles having a monodispersed particle size distribution may be used as a mixture.

The glass transition temperature Tg of polymer composing the polymer particles is preferably 30°C or higher, more preferably 40°C or higher, and still more preferably 50°C or higher.

As a preferable aspect of the polymer particles, polymer particles (hereinafter, also referred to as polymer particles (a)) including a copolymer (hereinafter, also referred to as a specific copolymer (a)) having a repeating unit derived from a hydrophilic monomer and other repeating units are exemplified.

(Repeating unit derived from hydrophilic monomer)

The repeating unit derived from a hydrophilic monomer, which is included in the specific copolymer (a), is not particularly limited as long as the repeating unit is derived from a hydrophilic group-containing monomer (hereinafter, in the description of the specific copolymer (a), also referred to as the hydrophilic monomer). Moreover, the specific copolymer (a) may contain only one kind of repeating unit derived from a hydrophilic monomer or may contain two or more kinds of repeating units derived from a hydrophilic monomer. That is, in the specific copolymer (a), the repeating unit derived from a hydrophilic monomer may be a repeating unit derived from one kind of hydrophilic monomer, or may be a repeating unit derived from two or more kinds of hydrophilic monomers.

The hydrophilic group that the hydrophilic monomer has is not particularly limited, but may be a dissociable hydrophilic group or a nonionic non-dissociable hydrophilic group.

From the viewpoint of an excellent self-dispersibility in the aqueous medium of the polymer particles containing the specific copolymer (a) and from the viewpoint of stability of the ink composition containing the polymer particles in an emulsified or dispersed state, as a hydrophilic group which a hydrophilic monomer has, at least one of hydrophilic groups is preferably a dissociable hydrophilic group, and more preferably an anionic dissociable group. Examples of the anionic dissociable group include a carboxy group, a phosphate group and a sulfonate group. Among these, a carboxy group and a sulfonate group are preferable, and a carboxy group is more preferable.

From the viewpoint of self-dispersibility, the hydrophilic monomer is preferably a monomer having a dissociable hydrophilic group, and is more preferably a monomer having a dissociable group and an ethylene unsaturated bond (hereinafter, referred to as a dissociable group-containing monomer).

Examples of the dissociable group-containing monomer includes an unsaturated carboxylic acid monomer having a carboxy group as a hydrophilic group, an unsaturated sulfonic acid monomer having a sulfonate group as a hydrophilic group and an unsaturated phosphoric acid monomer having a phosphate group as a hydrophilic group.

Specific examples of the unsaturated carboxylic acid monomer include acrylic acid, methacrylic acid, crotonic acid, itaconic acid, maleic acid, fumaric acid, citraconic acid and 2-methacryloyloxy methylsuccinic acid.

Specific examples of the unsaturated sulfonic acid monomer include styrenesulfonic acid, 2-acrylamido-2-methylpropanesulfonic acid, 3-sulfopropyl (meth)acrylate and bis-(3-sulfopropyl)-itaconate.

Specific examples of the unsaturated phosphoric acid monomer include vinylphosphonic acid, vinyl phosphate, bis(methacryloxyethyl) phosphate, diphenyl-2-acryloxyethyl phosphate, diphenyl-2-methacryloyl oxyethyl phosphate and dibutyl-2-acryloyloxyethyl phosphate.

Among the dissociable group-containing monomers, from the viewpoint of dispersion stability and ejection stability of the obtained ink composition, an unsaturated carboxylic acid monomer is preferable, at least one of acrylic acid and methacrylic acid is more preferable, and methacrylic acid is particularly preferable.

Examples of a monomer having a nonionic non-dissociable hydrophilic group include an ethylene unsaturated monomer having a (poly)ethylene oxide group or a polypropylene oxide group such as 2-methoxyethyl acrylate, 2-(2-methoxyethoxy)ethyl acrylate, 2-(2-methoxyethoxy)ethyl methacrylate, ethoxytriethylene glycol methacrylate, methoxy polyethylene glycol (having a molecular weight of 200 to 1000) monomethacrylate, polyethylene glycol (having a molecular weight of 200 to 1000) monomethacrylate; and an ethylene unsaturated monomer having a hydroxyl group such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate and hydroxyhexyl (meth)acrylate.

As a monomer having a nonionic non-dissociable hydrophilic group, from the viewpoint of particle stability and the content of water-soluble component, an ethylene unsaturated monomer having alkyl ether at a terminal thereof is more preferable than an ethylene unsaturated monomer having a hydroxyl group at a terminal thereof.

As the repeating unit derived from the hydrophilic monomer contained in the specific copolymer (a), any one of an aspect including only the repeating unit derived from a hydrophilic monomer having an anionic dissociable group and an aspect including both of the repeating unit derived from a hydrophilic monomer having an anionic dissociable group and a repeating unit derived from a hydrophilic monomer having a nonionic hydrophilic group is preferable.

Further, an aspect including two or more repeating units derived from a hydrophilic monomer having an anionic dissociable group or an aspect concurrently including two or more of the repeating unit derived from a hydrophilic monomer having an anionic dissociable group and a repeating unit derived from a hydrophilic monomer having a nonionic hydrophilic group is also preferable.

From the viewpoint of dispersion stability of polymer particles, the content of the repeating unit derived from the hydrophilic monomer contained in the specific copolymer (a) is preferably in a range of 1% by mass to 15% by mass, and more preferably in a range of 3% by mass to 12% by mass based on the total mass of the repeating unit composing the specific copolymer (a).

(Other repeating units)

The specific copolymer (a) contains other repeating units, in addition to a repeating unit derived from a hydrophilic monomer.

Other repeating units (hereinafter, appropriately referred to as other repeating units) are not limited as long as a repeating unit is derived from a monomer having no hydrophilic groups within the molecule. The specific copolymer (a) may contain only one kind of other repeating units or may contain two or more thereof. As the monomer having no hydrophilic group, a monomer having at least one of a chain aliphatic group, a cyclic aliphatic group and an aromatic group in the molecule and having no hydrophilic groups is exemplified.

Specific examples of the monomers forming other repeating units (hereinafter, also referred to as "other copolymerizable monomers") include alkyl (meth)acrylates such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, ethylhexyl (meth)acrylate and isobornyl (meth)acrylate; aromatic ring-containing (meta)acrylates such as benzyl (meth)acrylate and phenoxyethyl (meth)acrylate; styrenes such as styrene, α-methylstyrene and chlorostyrene; dialkylaminoalkyl (meth)acrylates such as dimethylaminoethyl (meth)acrylate; and (meth)acrylamides such as N-hydroxyalkyl (meth)acrylamides, for example N-hydroxymethyl (meth)acrylamide, N-hydroxyethyl (meth)acrylamide and N-hydroxybutyl (meth)acrylamide, and N-alkoxyalkyl (meth)acrylamides, for example N-methoxymethyl (meth)acrylamide, N-ethoxymethyl (meth)acrylamide, N-(n-,iso)butoxymethyl (meth)acrylamide, N-methoxyethyl (meth)acrylamide, N-ethoxyethyl (meth)acrylamide and N-(n-,iso)butoxyethyl (meth)acrylamide.

Among these, from the viewpoint of flexibility of polymer skeleton and ease of glass transition temperature (Tg) control and from the viewpoint of dispersion stability of the formed polymer particles (a), monomers forming other repeating units are preferably at least one kind selected from a group consisting of (meth)acrylates and styrenes containing a chain or branched alkyl group having 1 to 12 carbon atoms, more preferably at least one kind selected from a group consisting of (meth)acrylates and styrenes containing a chain or branched alkyl group having 1 to 8 carbon atoms, and particularly preferably methyl (meth)acrylate and n-butyl (meth)acrylate, 2-ethylhexyl (meth)acrylate. Herein, the chain alkyl group is an alkyl group having a straight-chain or branched-chain.

Further, in the present invention, (meth)acrylates having an aromatic group may be preferably used. By containing (meth)acrylates having an aromatic group, the obtained polymer particles (a) have an advantage in improving solvent resistance.

Only one kind of repeating unit derived from a monomer having no hydrophilic groups, which is contained in the specific copolymer (a), may be used or two or more kinds thereof may be used depending on the purpose.

In the specific copolymer (a), the content of the repeating unit derived from a monomer having no hydrophilic groups is preferably in a range of 99% by mass to 85% by mass, and more preferably in a range of 97% by mass to 85% by mass.

As the preferable combination of a monomer having a hydrophilic group and a monomer having no hydrophilic groups, which is used for the synthesis of the specific copolymer (a), for example, the combination of at least one kind of monomers having a hydrophilic group, selected from methacrylic acid (MAA) and acrylic acid (AA), and at least one kind of monomers having no hydrophilic groups, selected from methyl methacrylate (MMA), methyl acrylate (MA), 2-ethyl hexylacrylate (EHA), n-butylacrylate (BA) and styrene (St), is exemplified.

From the viewpoint of ejection performance and manufacturability of the ink composition, the specific copolymer (a) of the present invention is preferably vinyl polymer.

For example, the specific copolymer (a) may be obtained by a radical polymerization of a monomer having a hydrophilic group and a monomer having no hydrophilic groups which is a known polymerization method.

Further, the specific copolymer (a) may be obtained in such a manner that a portion of dissociable hydrophilic groups among the hydrophilic groups, as necessary, is neutralized by hydroxides of alkali metals or the like.

In a case where the specific copolymer (a) is obtained by a solution polymerization method, the polymer particles (a) may be obtained by a known method such as the phase inversion method. In a case where the specific copolymer (a) is prepared by an emulsion polymerization method in which water is used as a medium or a heterogeneous polymerization method such as a suspension polymerization method or a dispersion polymerization method, the specific copolymer (a) may be obtained as polymer particles (a).

The polymer particles of the present invention may be one kind or combination of two or more kinds thereof.

The content of the polymer particles in the ink composition of the present invention is preferably 0.5% by mass to 20% by mass, more preferably 1% by mass to 20% by mass, and still more preferably 2% by mass to 15% by mass, based on the total mass of the ink composition.

<Polymer compound containing fluorine-substituted hydrocarbon group and having weight average molecular weight of 2,000 to 200,000>

The ink composition of the present invention contains 0.1%by mass to 10% by mass of the polymer compound [specific polymer compound] which contains a fluorine-substituted hydrocarbon group and has a weight average molecular weight of 2,000 to 200,000, based on the total mass of the ink composition.

As the specific polymer compound, vinyl-based polymers, urethane-based polymers and ester-based polymers are preferable, vinyl-based polymers and urethane-based polymers are more preferable, and vinyl-based polymers are particularly preferable.

The specific polymer compound has a fluorine-substituted hydrocarbon group. The fluorine-substituted hydrocarbon group is a group having a property of which the group is aligned in the surface of the image portion formed by the ink composition of the present invention and in the vicinity thereof.

The specific polymer compound may have a fluorine-substituted hydrocarbon group on any one of the main chain and the side chain of the polymer configuring the polymer compound, but it is more preferable that the specific polymer compound have the fluorine-substituted hydrocarbon group on the side chain, and it is still more preferable that the specific polymer compound have the fluorine-substituted hydrocarbon group on the terminal of the side chain.

The fluorine-substituted hydrocarbon group, which the specific polymer compound has, is a hydrocarbon group substituted with at least one fluorine atom. For example, a fluoroalkyl group or a fluoroalkylene group in which at least one hydrogen atom in an alkyl group or an alkylene group is substituted with a fluorine atom is exemplified. Among, these, a perfluoroalkyl group and a perfluoroalkylene group in which all hydrogen atoms in an alkyl group or an alkylene group are substituted with a fluorine atom are more preferable.

In a case where the hydrocarbon group in the fluorine-substituted hydrocarbon group is an alkyl group, as the alkyl group, an alkyl group having 1 to 20 carbon atoms is preferable, an alkyl group having 4 to 10 carbon atoms is more preferable, and an alkyl group having 4 to 8 carbon atoms is still more preferable. Moreover, in a case where the hydrocarbon group in the fluorine-substituted hydrocarbon group is an alkylene group, as the alkylene group, an alkylene group having 1 to 20 carbon atoms is preferable, an alkylene group having 4 to 10 carbon atoms is more preferable, and an alkylene group having 4 to 8 carbon atoms is still more preferable.

As the fluorine-substituted hydrocarbon group which the specific polymer compound has, a fluoroalkyl group and a perfluoroalkyl group having 2 to 20 carbon atoms is more preferable, and a perfluoroalkyl group having 2 to 20 carbon atoms is particularly preferable.

The content of a fluorine atom in the specific polymer compound is preferably in a range of 5 mmol/g to 30 mmol/g, and more preferably in a range of 8 mmol/g to 25 mmol/g, from the viewpoint of segregation of the specific polymer compound in the surface of the image portion formed by the ink composition.

The content of a fluorine atom can be confirmed by elemental analysis (combustion method).

The specific polymer compound is preferably a polymer compound containing a repeating unit derived from a monomer represented by the general formula (1) below.

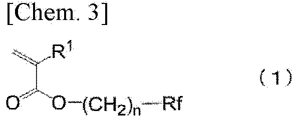

In the general formula (1), Rf represents a fluoroalkyl or perfluoroalkyl group having 2 to 20 carbon atoms, n represents 1 or 2 and R¹ represents a hydrogen atom or a methyl group.

In the general formula (1), Rf represents a fluoroalkyl or perfluoroalkyl group having 2 to 20 carbon atoms. The number of fluorine atoms of the fluoroalkyl group or perfluoroalkyl group is preferably 3 or more, more preferably 6 or more, and particularly preferably 9 or more.

Since the number of fluorine atoms in the fluoroalkyl group or perfluoroalkyl group represented by Rf has three or more, phenomena where the fluorine concentration in the surface of the image formed by the ink composition and in the vicinity thereof is higher, and where the fluorine concentration of the image in the depth direction is lower occur clearly. Among these, particularly, the number of the fluorine atoms per unit derived from the monomer represented by the general formula (1) is preferably 3 to 30, more preferably 9 to 25, and particularly preferably 13 to 20.

As the monomer represented by the general formula (1), a fluoroalkyl (meth)acrylate is exemplified as described below.

CH₂=CRCO₂(CH₂)ₚC_{q}F_{2q+1}

(p represents 1 or 2 and q represents an integer of 4 to 12. R represents a hydrogen atom or a methyl group.)

CH₂=CRCO₂(CH₂)ᵣ(CF₂)ₛH

(r represents 1 or 2 and s represents an integer of 5 to 12. R represents a hydrogen atom or a methyl group.)

The content of the repeating unit derived from the monomer represented by the general formula (1) is preferably 5% by mass to 100% by mass, more preferably 50% by mass to 100% by mass, and particularly preferably 88% by mass to 100% by mass, based on total mass of the specific polymer compound.

It is more preferable that the specific polymer compound contain a repeating unit derived from a monomer having a hydrophilic group (hereinafter, appropriately referred to as a "monomer having a hydrophilic group").

Only one kind of repeating unit derived from a monomer having a hydrophilic group may be contained in the specific polymer compound or two or more repeating units may be contained in the specific polymer compound.

A hydrophilic group, which a monomer having a hydrophilic group has, is not limited as long as the hydrophilic group is a functional group which is able to apply hydrophilicity to the specific polymer compound in the aqueous medium. For example, the hydrophilic group is preferably at least a hydrophilic group selected from one group consisting of -CO₂H, -CO₂⁻, -CONH₂, -SO₂OH, -SO₂O⁻, -PO₃H, -P(O)(OH)(O⁻), -P(O)(O⁻)₂, -OH and -NH₃⁺. From the viewpoint of solubility of the specific polymer compound with respect to the aqueous medium, the hydrophilic group is preferably at least a hydrophilic group selected from one group consisting of -CO₂H, -CO₂⁻, -SO₂OH and -SO₂O⁻, more preferably -CO₂H or -CO₂⁻, and particularly preferably -CO₂H.

Examples of the preferable aspect of the monomer having a hydrophilic group include acrylic acid, methacrylic acid, crotonic acid, itaconic acid, maleic acid, fumaric acid, citraconic acid, 2-methacryloyloxymethylsuccinic acid, styrenesulfonic acid, 2-acrylamide-2-methylpropanesulfonic acid, 3-sulfopropyl (meth)acrylate, bis-(3-sulfopropyl)-itaconate, vinylphosphonic acid, vinyl phosphate, bis(methacryloxyethyl) phosphate, diphenyl-2-acryloyloxyethyl phosphate, diphenyl-2-methacryloyl oxyethyl phosphate and dibutyl-2-acryloyloxyethyl phosphate.

As a preferable aspect of the specific polymer compound, the specific polymer compound containing a repeating unit derived from the monomer represented by the general formula (2), which is a monomer having a hydrophilic group, is exemplified.

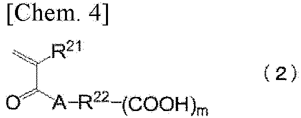

In the general formula (2), R²¹ represents a hydrogen atom or a methyl group, R²² represents an (m+1)-valent hydrocarbon group including an aliphatic ring structure having 3 to 30 carbon atoms which may have a substituent, and one or more arbitrary carbon atoms in the hydrocarbon group may be substituted with a hetero atom selected from a nitrogen atom, an oxygen atom and a sulfur atom, or -C(=O)-; A represents an oxygen atom or -NR²³-, R²³ represents a hydrogen atom or a monovalent hydrocarbon group having 1 to 10 carbon atoms.

m represents an integer of 1 to 5.

R²¹ in the general formula (2) represents a hydrogen atom or a methyl group, and particularly preferably a methyl group.

In the general formula (2), R²² represents an (m+1)-valent hydrocarbon group including an aliphatic ring structure having 3 to 30 carbon atoms. The hydrocarbon group may have one or more substituents, and the number of carbon atoms of the hydrocarbon group having an arbitrary substituent is 3 to 30.

As the (m+1)-valent hydrocarbon group having this aliphatic ring structure, an (m+1)-valent hydrocarbon group formed by removing (m+1) hydrogen atoms on an arbitrary carbon atom composing a compound having an aliphatic ring structure, which may be substituted with one or more arbitrary substituents, such as cyclopropane, cyclopentane, cyclohexane, cycloheptane, cyclooctane, cyclodecane, dicyclohexyl, tert-cyclohexyl, norbornane, decahydronaphthalene, perhydrofluorene, tricyclo[5.2.1.02.6]decane, adamantane, quadricyclane, congressane, cubane, spiro[4.4]octane, cyclopentene, cyclohexene, cycloheptene, cyclooctene, cyclodecene, cyclohexadiene, cycloheptadiene, cyclooctadiene, cycloheptatriene, cyclodecatriene, cyclooctatetraene, norbornylene, octahydronaphthalene, bicyclo[2.2.1]heptadiene, bicyclo[4.3.0]nonadien, dicyclopentadiene, hexahydroanthracene and spiro[4.5]decadiene may be exemplified.

One or more carbon atoms in the (m+1)-valent hydrocarbon group having an aliphatic ring structure of R²² may be substituted with a hetero atom selected from a nitrogen atom, an oxygen atom and a sulfur atom, or -C(=O)-. R²² is preferably an (m+1)-valent hydrocarbon group having an aliphatic ring structure having 5 to 30 carbon atoms (more preferably having 5 to 15 carbon atoms), which may have a substituent and contain two or more rings, such as a condensed polycyclic hydrocarbon group, a crosslinked cyclic aliphatic hydrocarbon group, an o-aliphatic hydrocarbon group and a ring-aggregated aliphatic hydrocarbon group. In this case, also, the number of carbon atoms includes carbon atoms which a substituent group has.

As a substituent which may be introduced in R²², monovalent non-metal atoms excluding hydrogen are exemplified. Examples of the preferable monovalent non-metal atoms excluding hydrogen include halogen atoms (-F, -Br, -Cl, -I), a hydroxyl group, an alkoxy group, an aryloxy group, an amino group, an N-alkylamino group, an N,N-dialkylamino group, an N-arylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkyl sulfoxy group, an aryl sulfoxy group, an acylthio group, an acylamino group, an N-alkyl acyl amino group, an N-aryl acyl amino group, an aryl group, an alkenyl group and an alkynyl group.

In the general formula (2), A represents an oxygen atom or -NR²³-. In a case where A represents -NR²³-, R²³ represents a hydrogen atom or a monovalent hydrocarbon group having 1 to 10 carbon atoms. As the monovalent hydrocarbon group having 1 to 10 carbon atoms which is represented by R²³, an alkyl group, an aryl group, an alkenyl group and an alkynyl group are exemplified.

Specific examples of the alkyl group represented by R²³ include a linear, branched or cyclic alkyl group having 1 to 10 carbon atoms such as a methyl group, an ethyl group, a propyl group, a butyl group, a pentyl group, a hexyl group, a heptyl group, an octyl group, a nonyl group, a decyl group, an isopropyl group, an isobutyl group, a sec-butyl group, a tert-butyl group, an isopentyl group, a neopentyl group, a 1-methylbutyl group, an isohexyl group, a 2-ethylhexyl group, a 2-methylhexyl group, a cyclopentyl group, a cyclohexyl group, a 1-adamantyl group and a 2-norbornyl group.

Specific examples of the aryl group represented by R²³ include an aryl group having 1 to 10 carbon atoms such as a phenyl group, a naphthyl group and an indenyl group; a heteroaryl group having 1 to 10 carbon atoms which contains one hetero atom selected from a group consisting of a nitrogen atom, an oxygen atom and a sulfur atom; a furyl group; a thienyl group; a pyrrolyl group; a pyridyl group; and a quinolyl group.

Specific examples of the alkenyl group represented by R²³ include a linear, branched or cyclic alkenyl group having 1 to 10 carbon atoms such as a vinyl group, a 1-propenyl group, a 1-butenyl group, a 1-methyl-1-propenyl group, a 1-cyclopentenyl group and a 1-cyclohexenyl group.

Specific examples of the alkynyl group represented by R²³ include an alkynyl group having 1 to 10 carbon atoms such as an ethinyl group, a 1-propynyl group, a 1-butynyl group and a 1-octynyl group.

R²³ may further have a substituent. As a substituent group which can be introduced, the same substituent groups as exemplified in R²² are exemplified. Herein, the number of carbon atoms in R²³, which includes the number of carbon atoms of the substituent group, is 1 to 10.

In the general formula (2), A is preferably an oxygen atom or -NH-, because synthesis thereof is easy.

m represents an integer of 1 to 5, and preferably an integer of 1.

Hereinafter, a specific preferred example of the repeating unit derived from the monomer represented by the general formula (2) will be described, but the present invention is not limited thereto.

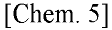

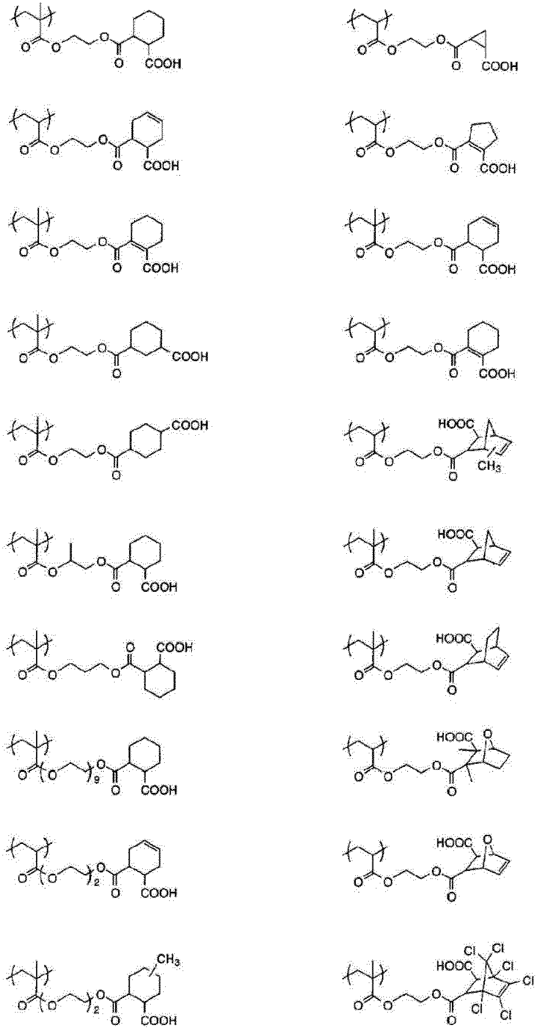

The content of the repeating unit derived from a monomer having a hydrophilic group such as the monomer represented by the general formula (2) is preferably 0.1% by mass to 99% by mass, more preferably 1% by mass to 80% by mass, and particularly preferably 5% by mass to 60% by mass, based on the total molar amount of the specific polymer compound.

The specific polymer compound is preferably a polymer compound which contains 60% by mass to 90% by mass of repeating units derived from the monomer represented by the general formula (1) and contains 10% by mass to 40% by mass of repeating units derived from a monomer having a hydrophilic group.

(Other repeating units)

In addition to the repeating unit derived from the monomer represented by the general formula (1) and a monomer having a hydrophilic group which is contained as necessary, the specific polymer compound according to the present invention may contains other repeating units derived from a monomer other than the above-described repeating unit, without interfering with the effect of the present invention.

Examples of the monomer which can form other repeating units include a known monomer such as esters of acrylic acid, esters of methacrylic acid, acrylic amides, methacrylamides, vinyl esters, styrenes, acrylonitrile, maleic anhydrides and maleimide.

Examples of the esters of acrylic acid include methyl acrylate, ethyl acrylate, (n- or iso)propyl acrylate, (n-, iso, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 5-hydroxypentyl acrylate, cyclohexyl acrylate, allyl acrylate, trimethylolpropane monoacrylate, pentaerythritol monoacrylate, glycidyl acrylate, benzyl acrylate, methoxybenzyl acrylate, chlorobenzyl acrylate, 2-(p-hydroxyphenyl)ethyl acrylate, furfuryl acrylate, tetrahydrofurfuryl acrylate, phenyl acrylate, chlorophenyl acrylate and sulfamoylphenyl acrylate.

Examples of the esters of methacrylic acid include methyl methacrylate, ethyl methacrylate, (n- or iso)propyl methacrylate, (n-, iso, sec- or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 5-hydroxypentyl methacrylate, cyclohexyl methacrylate, allyl methacrylate, trimethylolpropane monomethacrylate, pentaerythritol monomethacrylate, glycidyl methacrylate, methoxybenzyl methacrylate, chlorobenzyl methacrylate, 2-(p-hydroxyphenyl)ethyl methacrylate, furfuryl methacrylate, tetrahydrofurfuryl methacrylate, phenyl methacrylate, chlorophenyl methacrylate and sulfamoylphenyl methacrylate.

Examples of the acrylic amides include acrylamide, N-methyl acrylamide, N-ethyl acrylamide, N-propyl acrylamide, N-butyl acrylamide, N-benzyl acrylamide, N-hydroxyethyl acrylamide, N-phenyl acrylamide, N-tolylacrylamide, N-(p-hydroxyphenyl) acrylamide, N-(sulfamoylphenyl) acrylamide, N-(phenylsulfonyl) acrylamide, N-(tolylsulfonyl) acrylamide, N,N-dimethylacrylamide, N-methyl-N-phenylacrylamide and N-hydroxyethyl-N-methylacrylamide.

Examples of the methacrylamides include methacrylamide, N-methyl methacrylamide, N-ethyl methacrylamide, N-propyl methacrylamide, N-butyl methacrylamide, N-benzyl methacrylamide, N-hydroxyethyl methacrylamide, N-phenyl methacrylamide, N-tolyl methacrylamide, N-(p-hydroxyphenyl) methacrylamide, N-(sulfamoylphenyl) methacrylamide, N-(phenylsulfonyl) methacrylamide, N-(tolylsulfonyl) methacrylamide, N,N-dimethyl methacrylamide, N-methyl-N-phenyl methacrylamide and N-hydroxyethyl-N-methyl methacrylamide.

Example of the vinyl esters include vinyl acetate, vinyl butyrate and vinyl benzoate.

Examples of the styrenes include styrene, methylstyrene, dimethylstyrene, trimethylstyrene, ethylstyrene, propylstyrene, cyclohexylstyrene, chloromethylstyrene, trifluoromethyl styrene, ethoxymethyl styrene, acetoxymethyl styrene, methoxystyrene, dimethoxystyrene, chlorostyrene, dichlorostyrene, bromostyrene, iodostyrene, fluorostyrene and carboxystyrene.

Among these monomers, esters of acrylic acid, esters of methacrylic acid, vinyl esters, styrenes and acrylonitrile, which have 20 or less carbon atoms, are preferable.

In a case where the specific polymer compound contains other repeating units, the content of the repeating units is preferably 10% by mass to 90% by mass, and more preferably 30% by mass to 80% by mass.

Hereinafter, a specific example of the specific polymer compound will be described, but the present invention is not limited thereto.

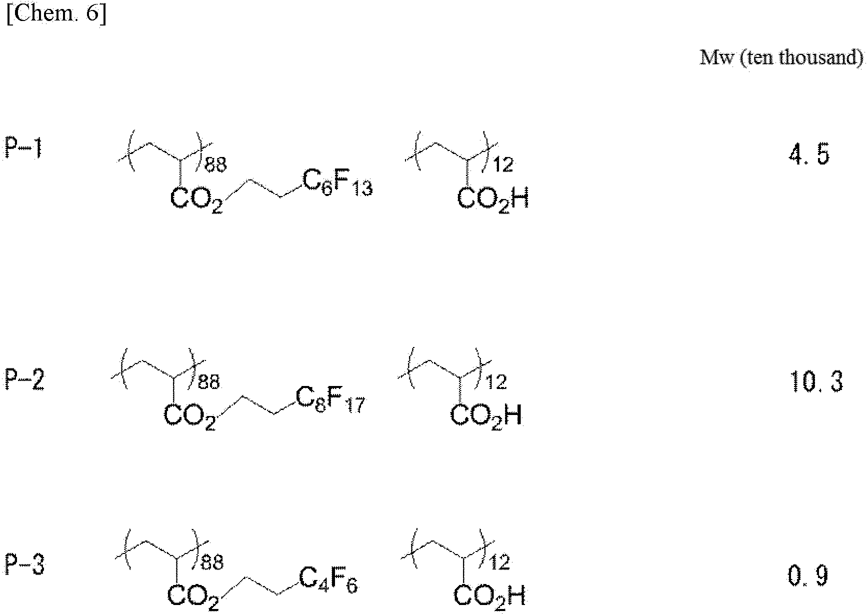

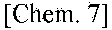

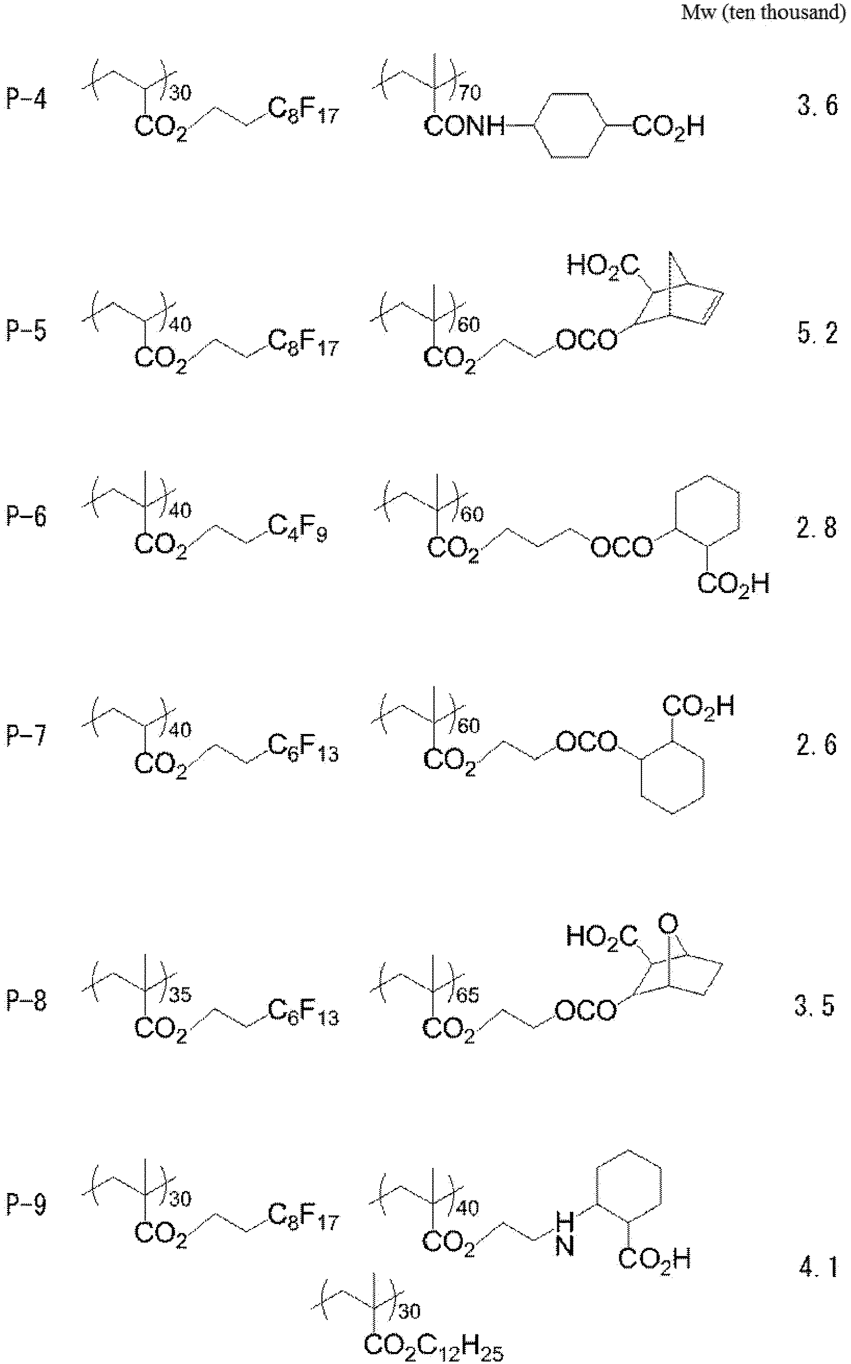

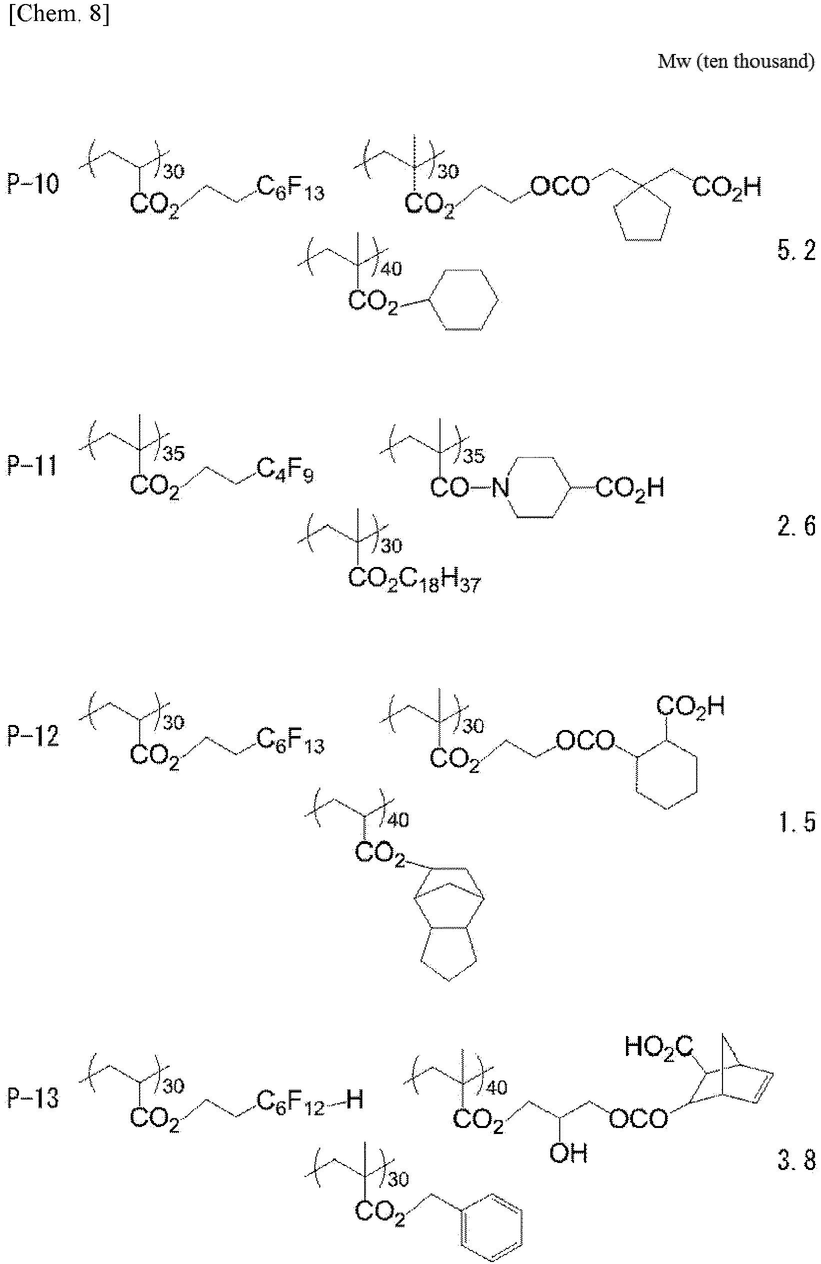

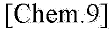

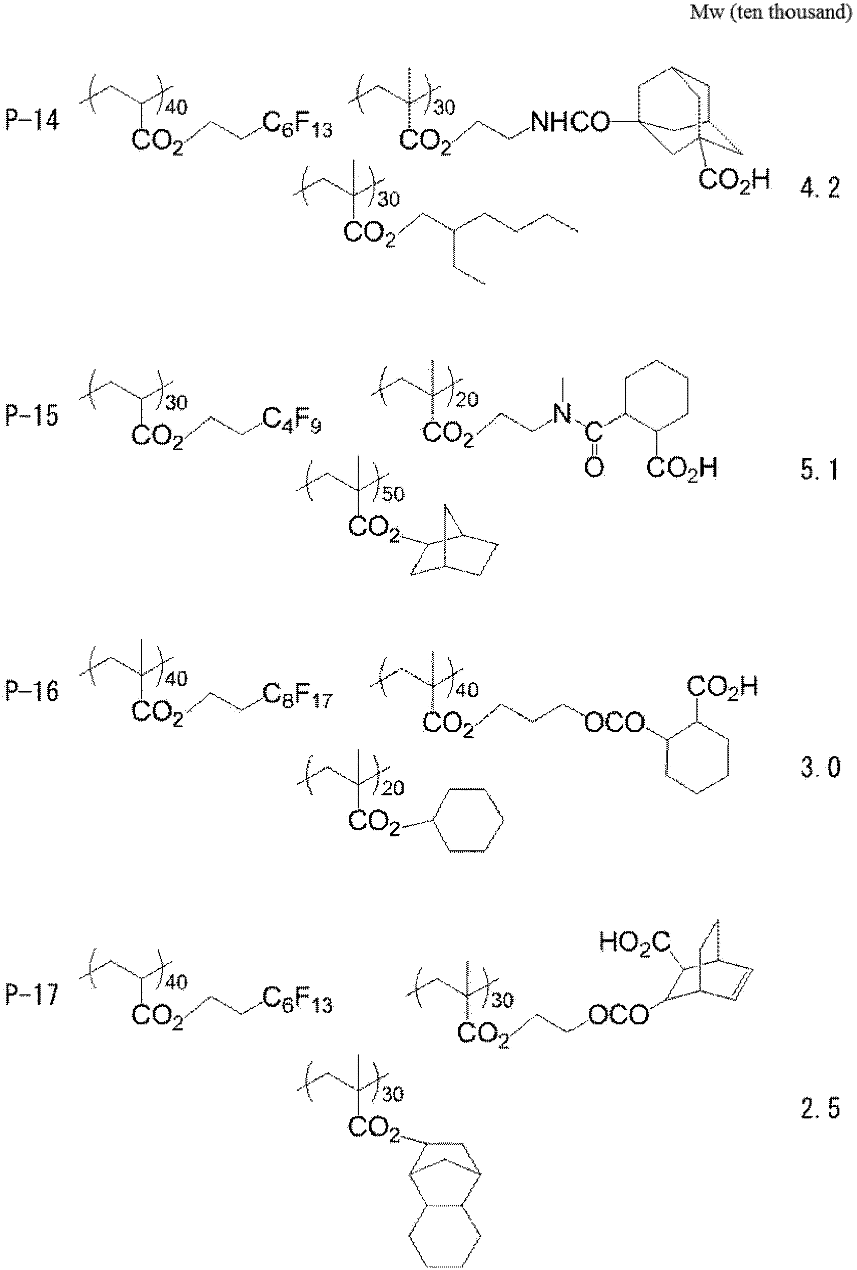

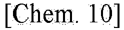

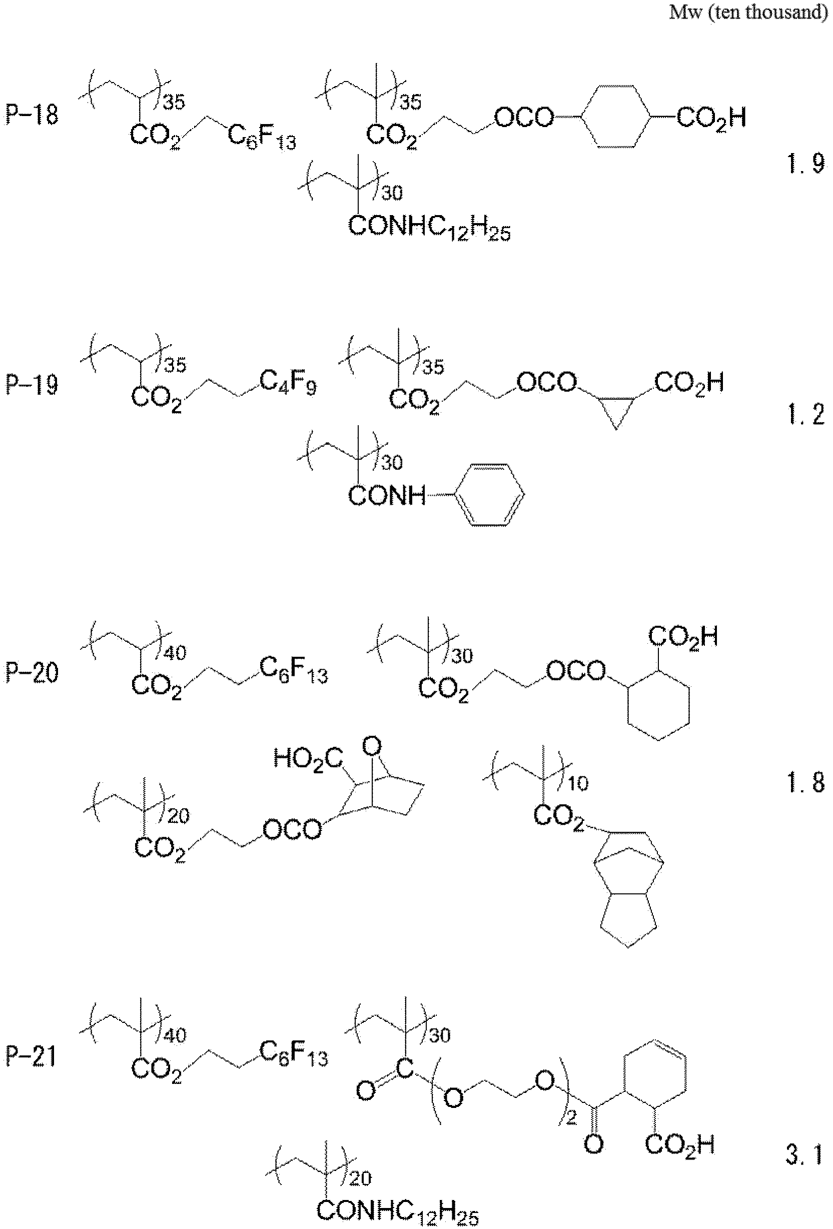

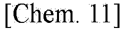

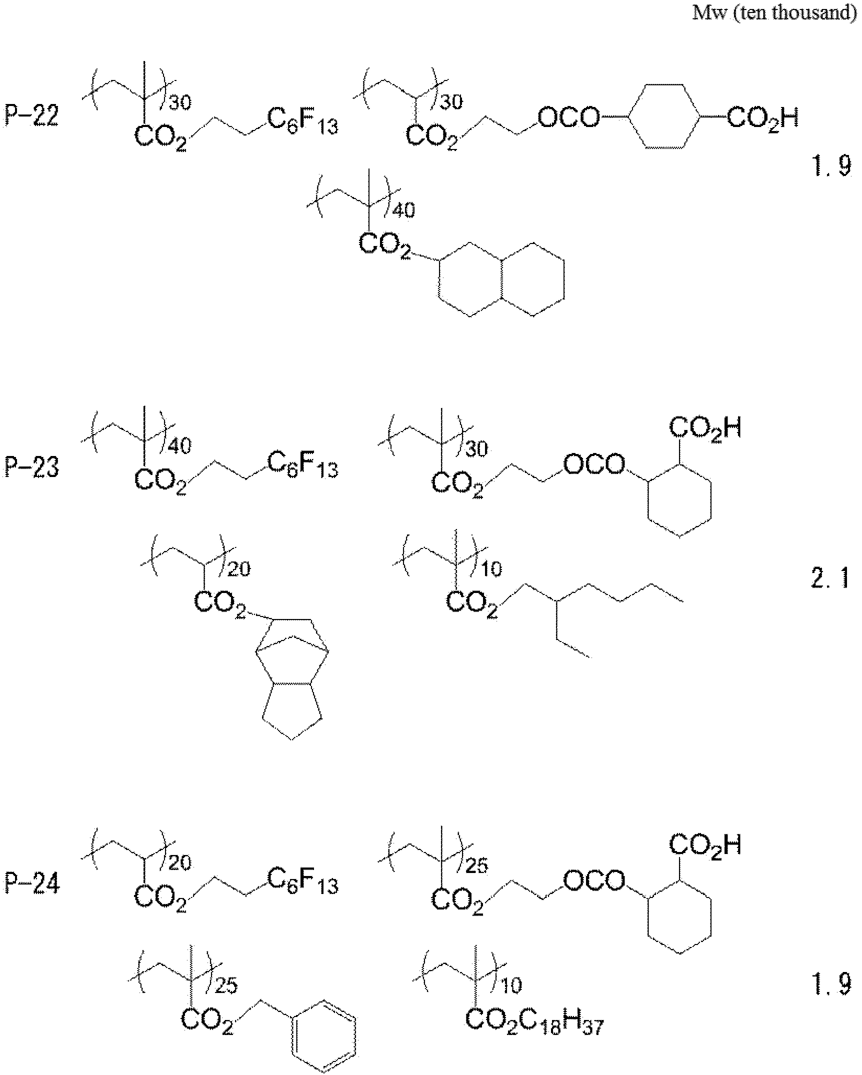

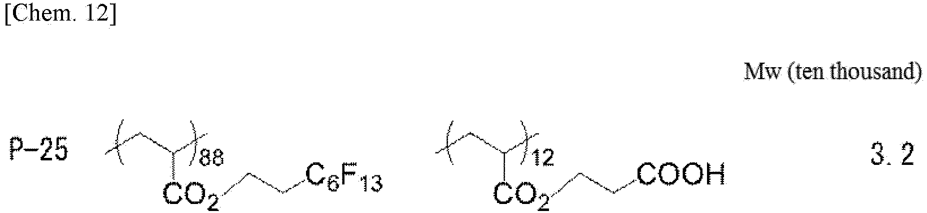

The specific polymer compound can be obtained by performing polymerization with a known polymerization method, for example, using (i) a monomer represented by the general formula (1) such as a monomer having a fluorine-substituted hydrocarbon group, and (ii) a monomer having a hydrophilic group and (iii) a monomer for forming other repeating units which are used as necessary. Specifically, the specific polymer compound can be obtained by performing synthesis, for example solution polymerization, precipitation polymerization, suspension polymerization, bulk polymerization and emulsion polymerization. A polymerization reaction is performed by a known operation such as a batch-wise, semi-continuous or continuous operation. Examples of the polymerization initiation method include a method using a radical initiator and a method using irradiation by light or radiation. Specific examples of the method include a polymerization method disclosed in "Macromolecule Synthesis Method", Teiji Tsuruta, revised version (published by THE NIKKAN KOGYO SHIMBUN, LTD., 1971) or "Experimental Technique of Macromolecule Synthesis", Takayuki Otsu and Masayoshi Kinoshita, published by KAGAKUDOJIN, 1972, 124 to 154 pages. The specific polymer compound can be produced using the above-described methods.

The weight average molecular weight of the specific polymer compound is preferably 2,000 to 200,000, more preferably 10,000 to 100,000, and still more preferably 30,000 to 80,000. When the weight average molecular weight of the specific polymer compound is less than 2,000, it is difficult to exhibit the surface segregation by the specific polymer compound. When the weight average molecular weight of the specific polymer compound exceeds 200,000, it is difficult for the specific polymer compound to be dissolved in the aqueous medium.

The acid value of the specific polymer compound is preferably 5 mg KOH/g to 500 mg KOH/g, more preferably 10 mg KOH/g to 450 mg KOH/g, and still more preferably 15 mg KOH/g to 400 mg KOH/g. By setting the acid value to this range, the dispersion stability of the specific polymer compound in the ink composition is improved.

Herein, the acid value is defined as mass of KOH in milligrams (mg) that is required to completely neutralize 1g of the specific polymer compound, and is calculated by the method disclosed in Japanese Industrial Standard (JIS K 0070:1992). This acid value is applied to the present invention.

The content of the specific polymer compound in the ink composition of the present invention is 0.1% by mass to 10% by mass, based on the total mass of the ink composition. From the viewpoint of the exhibition of surface segregation by the specific polymer compound, the content of the specific polymer compound is preferably 1% by mass to 10% by mass, and more preferably 2% by mass to 5% by mass. On the other hand, when the content of the specific polymer compound is less than 0.1% by mass, curing for causing the blocking resistance to exhibit is not sufficient. When the content of the specific polymer compound exceeds 10% by mass, it is difficult for the specific polymer compound to be dissolved in the ink composition.

<Colorant>

The ink composition according to the present invention may contain at least one kind of colorants.

The ink composition of the present invention contains a colorant, thereby being a color ink composition.

As the colorant according to the present invention, known dyes, pigments, or the like may be used without any particular limitation. Among these, from the viewpoint of the ink colorability, a colorant, which is almost insoluble or sparingly-soluble in water, is preferable. Specific examples of the colorant include various pigments, disperse dyes, oil-soluble dyes and dyes that form J-aggregates. From the viewpoint of endurance of an ink image to be formed, such as heat resistance, light resistance, water resistance and solvent resistance, pigments are more preferable.

(Pigments)

When a pigment is used as the colorant, the pigment may be contained in the ink composition as a pigment dispersion. Using a pigment dispersion as the colorant is preferable from the viewpoint of improving the solvent resistance. As a pigment dispersion, a dispersion using a self-dispersing pigment may be used in addition to a dispersion that a pigment is dispersed using a pigment dispersant.

As the pigment according to the present invention, the type thereof is not particularly limited, and known organic and inorganic pigments can be used.

As organic pigments, for example, azo pigments, polycyclic pigments, dye chelates, nitro pigments, nitroso pigments, aniline black, and the like may be exemplified. Among these, azo pigments, polycyclic pigments, and the like are more preferable. Examples of the azo pigments include azo lakes, insoluble azo pigments, condensed azo pigments and chelated azo pigments. Examples of the polycyclic pigments include phthalocyanine pigments, perylene pigments, perinone pigments, anthraquinone pigments, quinacridone pigments, dioxazine pigments, indigo pigments, thioindigo pigments, isoindolinone pigments, and quinophthalone pigments. Examples of the dye chelates include basic dye chelates and acidic dye chelates.

In addition, as inorganic pigments, for example, titanium oxide, iron oxide, calcium carbonate, barium sulfate, aluminum hydroxide, barium yellow, cadmium red, chrome yellow, carbon black, and the like, may be exemplified. Among these, carbon black is particularly preferable. As the carbon black, carbon blacks produced by a known method, such as a contact method, a furnace method or a thermal method, can be exemplified.

Specific examples of the pigments which can be used in the present invention include the pigments disclosed in paragraphs [0142] to [0145] of JP2007-100071A.

The volume average particle size of the pigment is preferably 10 nm to 200 nm, more preferably 10 nm to 150 nm, and still more preferably 10 nm to 100 nm. When the volume average particle size thereof is 200 nm or less, color reproducibility may be improved, and in a case of an inkjet method, ejectability may be improved. Moreover, when the volume average particle size thereof is 10 nm or less, light resistance may be improved.

The particle size distribution of the pigment particles is not particularly limited, and may be either a broad particle size distribution or a monodisperse particle size distribution. It is also possible to use a mixture of two or more kinds of colorants each having a monodisperse particle size distribution.

The volume average particle size and particle size distribution of the pigment particles can be measured by, for example, a light scattering method.

(Dyes)

In a case of using dyes for colorants in the present invention, it is possible to use one holding a dye to a water-insoluble carrier. As dyes, any known dyes can be used without any particular limitation, for example, the dyes disclosed in JP2001-115066A, JP2001-335714A, JP2002-249677A and the like can also be suitably used in the present invention. In addition, a carrier is not particularly limited as long as it is insoluble or sparingly-soluble in water, and inorganic materials, organic materials and composites thereof can be used. Specifically, the carriers disclosed in JP2001-181549A, JP2007-169418A, and the like can also be suitably used in the present invention. The carrier (colorant) that holds the dye can be used as is, or, as necessary, can be used with a dispersant. As the dispersant, a dispersant described below can be suitably used.

Only one colorant may be used, or a combination of plural kinds of colorants selected, may be used.

From the viewpoint of color density, granularity, ink stability and ejection reliability, the content of colorant (particularly pigment) in the ink composition of the present invention is preferably 1% by mass to 25% by mass, and more preferably 5% by mass to 20% by mass, based on the total mass of the ink composition.

(Dispersant)

When a pigment is used as the colorant according to the invention, the pigment is preferably in the form of a dispersion of colored particles in which colored particles are dispersed in an aqueous medium by a dispersant. The dispersant may be a polymer dispersant or a surfactant-type dispersant having a low molecular weight. Moreover, the polymer dispersant may be a water-soluble polymer dispersant or a water-insoluble polymer dispersant.

In the present invention, from the viewpoint of dispersion stability and ejectability when the ink composition is applied to an inkjet method, the water-insoluble polymer dispersant is preferable.

- Water-insoluble polymer dispersant -

The water-insoluble polymer dispersant according to the present invention (hereinafter, simply referred to as a "dispersant" in some cases) is not particularly limited as long as it is a water-insoluble polymer and can disperse a pigment. Any known water-insoluble polymer dispersant can be used.

The water-insoluble polymer dispersant may be, for example, a polymer that includes a hydrophobic structural unit and a hydrophilic structural unit.

Examples of the monomer forming a hydrophobic structural unit include styrene-based monomers, alkyl (meth)acrylates and aromatic group-containing (meth)acrylates.

A monomer forming a hydrophilic structural unit is not particularly limited as long as it is a monomer having a hydrophilic group. Examples of a hydrophilic group include a nonionic group, a carboxyl group, a sulfonate group and a phosphate group. Examples of the nonionic group include a hydroxyl group, an amide group (in which the nitrogen atom is not substituted), a group derived from an alkylene oxide polymer (such as polyethylene oxide or polypropylene oxide) and a group derived from a sugar alcohol.

From the viewpoint of dispersion stability, a hydrophilic structural unit preferably has at least a carboxyl group. In a preferable aspect, a hydrophilic structural unit has both a nonionic group and a carboxyl group.

Specific examples of the water-insoluble polymer dispersant include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer and a styrene-maleic acid copolymer.

Herein, "(meth)acrylic acid" refers to acrylic acid or methacrylic acid.

From the viewpoint of dispersion stability of the pigment, the water-insoluble polymer dispersant is preferably a vinyl polymer having a carboxyl group, and is more preferably a vinyl polymer including, as a hydrophobic structural unit, a structural unit derived from at least an aromatic group-containing monomer, and including, as a hydrophilic structural unit, a structural unit having a carboxyl group.

From the viewpoint of dispersion stability of the pigment, the weight average molecular weight of the water-insoluble polymer dispersant is preferably 3,000 to 200,000, more preferably 5,000 to 100,000, still more preferably 5,000 to 80,000, and particularly preferably 10,000 to 60,000.

When using a dispersant, from the viewpoint of dispersibility of the pigment, ink colorability and dispersion stability, the content of the dispersant is preferably 10% by mass to 100% by mass, more preferably 20% by mass to 70% by mass, and particularly preferably 30% by mass to 50% by mass, based on the total mass of the pigment.

When the content of the dispersant is within the above range, pigment particles are coated with an appropriate amount of dispersant. Therefore, it is preferable that colored particles, which have small particle size and exhibit excellent time-course stability, can be obtained.

In the present invention, other dispersants may be included, in addition to the water-insoluble polymer dispersant. For example, a known water-soluble low-molecular-weight dispersant, a water-soluble polymer, or the like may be used. The content of a dispersant other than the water-insoluble polymer dispersant can be used in a range of the content of the above-described dispersant.

From the viewpoint of dispersion stability and ejectability, the colorant according to the present invention preferably includes a pigment and a water-insoluble polymer dispersant, and is preferably formed in such a manner that a water-insoluble polymer dispersant covers at least a part of the surface of a pigment. The colorant may be obtained as a pigment dispersion by, for example, dispersing a mixture of a pigment, a dispersant and, as necessary, a solvent (preferably an organic solvent), using a dispersion machine.

A pigment dispersion may be produced as a dispersion by, for example, adding an aqueous solution containing a basic substance to a mixture of a pigment, a water-insoluble polymer dispersant, and an organic solvent that dissolves or disperses the dispersant (a mixing/hydrating step), and thereafter removing the organic solvent (a solvent removal step). According to this, a pigment dispersion in which a pigment is finely dispersed, and which exhibits excellent storage stability, can be obtained.

It is necessary that the organic solvent can dissolve or disperse the dispersant. However, in addition to this, it is preferable that the organic solvent have some extent of affinity with water. Specifically, the organic solvent having solubility in water of 10% by mass to 50% by mass at 20°C or lower is preferable.

A pigment dispersion, more particularly, may be produced by a production method including the following step (1) and step (2), but is not limited thereto.

Step (1): a step of dispersing a mixture containing a pigment, a dispersant, and an organic solvent which dissolves or disperses the dispersant, a basic substance, a solution having water as a main component

Step (2): a step of removing at least a part of the organic solvent from the mixture after dispersing

In the step (1), first, the dispersant is dissolved or dispersed in the organic solvent to obtain a mixture thereof (mixing step). Then, a solution containing a colorant and a basic substance, and water as a main component, and water and, as necessary, a surfactant is added to the mixture, mixed all together, and dispersed to obtain an oil-in-water type colored particle dispersion.

The basic substance is used for neutralizing an anionic group (preferably, a carboxyl group) that the polymer may have. The neutralization degree of the basic substance is not particularly limited. Generally, it is preferable that a liquid nature of the finally obtained colorant particle dispersion be, for example, the pH is 4.5 to 10. Alternatively, pH may be determined by a desired neutralization degree of the polymer.

Preferred examples of the organic solvent include alcohol based solvents, ketone based solvents, and ether based solvents. Among these, examples of the alcohol based solvents include ethanol, isopropanol, n-butanol, tertiary butanol, isobutanol, and diacetone alcohol. Examples of the ketone based solvents include acetone, methyl ethyl ketone, diethyl ketone, and methyl isobutyl ketone. Examples of the ether based solvents include dibutyl ether, tetrahydrofuran, and dioxane. Among these solvents, isopropanol, acetone and methyl ethyl ketone are preferable, and methyl ethyl ketone is particularly preferable. Organic solvents may be used alone, or a plurality of them may be used together.

In production of a pigment dispersion, kneading and dispersing may be performed using a two-roll, a three-roll, a ball mill, TRON MILL, a disper, a kneader, a cokneader, a homogenizer, a blender, or monoaxial or diaxial extruder, while a strong shearing force is imparted. Details of kneading and dispersing are described in "Paint Flow and Pigment Dispersion", T. C. Patton (1964, published by John Wiley and Sons) or the like.

In addition, as necessary, a dispersion may be obtained by using a vertical or horizontal sand grinder, a pin mill, a slit mill, or an ultrasonic dispersing machine, and performing fine dispersing treatment with beads made of glass or zirconia having a diameter of 0.01 mm to 1 mm.

In the producing method of a pigment dispersion, the removal of an organic solvent is not particularly limited, and an organic solvent may be removed by a known method such as distillation under reduced pressure.

Colored particles in the pigment dispersion obtained as described above retains a good dispersed state and the obtained pigment dispersion becomes excellent in stability over time.

<Other additives>

In addition to an aqueous medium, latex particles, a specific polymer compound, and a colorant which is contained as necessary, the aqueous ink composition of the present invention may further include a known additive, without interfering the effect of the present invention. Hereinafter, additives which the ink composition may include will be described.

(Surfactant)

A surfactant may be added to the ink composition of the present invention.

Examples of a surfactant used preferably include anionic surfactants such as dialkyl sulfosuccinates, alkyl naphthalene sulfonates and salts of fatty acid; nonionic surfactants such as polyoxyethylene alkyl ethers, polyoxyethylene alkyl allyl ethers, acetylene glycols and polyoxyethylene-polyoxypropylene block copolymers; and cationic surfactants such as alkylamine salts and quaternary ammonium salts. Particularly, anionic surfactants and nonionic surfactants can be preferably used.

Moreover, in the present invention, a polymeric surfactant can be used. Preferred examples of the polymeric surfactant include water-soluble resins as described below. Examples of the water-soluble resins used preferably include styrene-acrylic acid-acrylic acid alkyl ester copolymers, styrene-acrylic acid copolymers, styrene-maleic acid-acrylic acid alkyl ester copolymers, styrene-maleic acid copolymers, styrene-methacrylic acid-acrylic acid alkyl ester copolymers, styrene-methacrylic acid copolymers, styrene-maleic acid half ester copolymers, vinylnaphthalene-acrylic acid copolymers and vinylnaphthalene-maleic acid copolymers.

In the present invention, silicone based surfactants having poly alkyl siloxane and fluoro-based surfactants having an alkyl fluoride group can be preferably used.

The amount of a surfactant added to the ink composition of the present invention is preferably 0.1% by mass to 2% by mass, and particularly preferably 0.2% by mass to 1.5% by mass, based on the total mass of the ink.

(Aqueous polymers)

Aqueous polymers having a different structure from that of the specific polymer compound can be added to the ink composition of the present invention.

Preferred examples of the aqueous polymers include protein materials such as gelatin, casein, or albumin; natural rubbers such as gum arabic and gum tragacanth; glucosides such as saponins; alginic acid derivatives such as glycol alginate ester, propylene glycol alginate ester, alginic acid triethanolamine or ammonium alginate; cellulose derivatives such as methylcellulose, carboxymethyl cellulose, hydroxyethyl cellulose or ethyl hydroxy cellulose; polyvinyl alcohols; polyvinylpyrrolidones; acrylic resins such as polyacrylic acid, acrylic acid-acrylic nitryl copolymers, acrylic acidpotassium-acrylic nitryl copolymers, vinyl acetate-acrylic acid ester copolymers or acrylic acid-acrylic acid ester copolymers; styrene acrylic acid resins such as styrene-acrylic acid copolymers, styrene-methacrylic acid copolymers, styrene-methacrylic acid-acrylic acid ester copolymers, styrene-α-methyl styrene-acrylic acid copolymers or styrene-α-methyl styrene-acrylic acid-acrylic acid ester copolymers; vinyl acetate copolymers such as styrene-maleic acid copolymers, styrene-anhydrous maleic acid copolymers, vinylnaphthalene-acrylic acid copolymers, vinylnaphthalene-maleic acid copolymers, vinyl acetate-ethylene copolymers, vinyl acetate-fatty acid vinyl ethylene copolymers, vinyl acetate-maleic acid ester copolymers, vinyl acetate-crotonic acid copolymers or vinyl acetate-acrylic acid copolymers; and salts thereof.

Other than those described above, corresponding to the purpose to enhance various types of performance such as ejection stability, adaptability for printing heads and ink cartridges, storage stability, or image retention properties, as necessary, it is possible to appropriately incorporate, into the ink composition of the present invention, various known additives such as viscosity modifiers, surface tension modifiers, specific resistance controlling agents, film forming agents, dispersants, ultraviolet light absorbers, antioxidants, color fading inhibitors, fungicides, antirust agents, solid moisturizers or silica microparticles. Examples of the additives include liquid minute oil droplets composed of liquid paraffin, dioctyl phthalate, tricresyl phosphate, or silicone oil; ultraviolet light absorbers disclosed in JP1982-74193A (JP-S57-74193A), JP1982-87988A (JP-S57-87988A) and JP1987-261476A (JP-S62-261476A); color fading inhibitors disclosed in JP1982-74192A (JP-S57-74192A), JP1982-87989A (JP-S57-87989A), JP1985-72785A (JP-S60-72785A), JP1986-146591A (JP-S61-146591A), JP1989-95091A (JP-H01-95091A) and JP1991-13376A (JP-H03-13376A); optical brightening agents disclosed in JP1984-42993A (JP-S59-42993A), JP1984-52689A (JP-S59-52689A), JP1987-280069A (JP-S62-280069A), JP1986-242871A (JP-S61-242871A) and JP1992-219266A (JP-H04-219266A); and pH adjusters such as sulfuric acid, phosphoric acid, citric acid, sodium hydroxide, potassium hydroxide and potassium carbonate.

<Preparation method of ink composition>

The preparation method of the ink composition is not particularly limited, and the ink composition can be prepared by stirring, mixing and dispersing each component using a container-drive medium mill such as a ball mill, a centrifugal mill, a planetary ball mill; a high-speed rotary mill such as a sand mill; a medium-agitation mill such as an agitation tank type mill; and a simple disperser such as Disper. The addition order of each component is arbitrary. As a preferred addition order, a pigment as a colorant, a polymer dispersant and a water-soluble organic solvent are pre-mixed and then dispersing-treated. Thereafter, the obtained pigment dispersion is mixed with latex particles, a specific polymer compound and a water-soluble organic solvent. In this case, the dispersion is uniformly mixed using simple stirring machines such as a three-one motor, a magnetic stirrer, Disper, and a homogenizer, at the time of adding or after adding. The mixing may be performed by using stirring machines such as a line mixer. Moreover, for the purpose of making pigment particles finer, the mixing may be performed by using a bead mill or a high-pressure injection mill. According to the kinds of pigments and polymer dispersants, latex particles may be added at the time of pre-mixing before pigment dispersion.

The surface tension at 25°C of the ink composition of the present invention is preferably 20 mN/m to 40 mN/m. The surface tension is measured using Automatic Surface Tensiometer CBVP-Z (manufactured by Kyowa Interface Science Co., Ltd.) under the condition of 25°C. The viscosity thereof is preferably 1 mPa·s to 40 mPa·s, and more preferably 3 mPa·s to 30 mPa·s. The viscosity of the ink composition is measured using VISCOMETER TV-22 (manufactured by TOKI SANGYO CO.LTD.) under the condition of 25°C.

[Image forming method]

The image forming method of the present invention includes an ink application step of applying the ink composition of the present invention onto a recording medium and a drying step of reducing an aqueous medium which is contained in the ink composition applied onto the recording medium. With this image forming method, an excellent image can be obtained.

(Ink application step)

Hereinafter, the ink application step in the image forming method of the present invention will be described.

The ink application step according to the present invention is not limited as long as it is a step of applying the ink composition of the present invention onto a recording medium.

An inkjet recording apparatus used in the image forming method of the present invention is not particularly limited, and a known inkjet recording apparatus which is able to achieve a target resolution can be arbitrarily selected and used. That is to say, any known inkjet recording apparatus including commercialized products can be executed ejection of the ink composition to a recording medium in the image forming method of the present invention.

As the inkjet recording apparatus which can be used in the present invention, an inkjet recording apparatus which includes an ink supply system, a temperature sensor and heating means is exemplified.

For example, the ink supply system is provided with an main tank that contains the ink composition of the present invention, a supply tube, an ink supply tank that is disposed immediately before an inkjet head, a filter and a piezoelectric inkjet head. The piezoelectric inkjet head can be driven so as to eject multi-size dots of particularly 1 to 100 pl, more particularly, 8 to 30 pl at a resolution of preferably 320 dpi x 320 dpi to 4,000 dpi x 4,000 dpi (dot per inch), more preferably 400 dpi x 400 dpi to 1,600 dpi x 1,600 dpi, and still more preferably 720 dpi x 720 dpi. The unit "dpi" in the present invention means the number of dots per 2.54 cm (1 inch).

Since it is preferable that the temperature of the ink composition ejected at the ink application step be constant, the inkjet recording apparatus is preferably provided with an ink composition temperature stabilizing means. A target portion subject to be at constant temperature is all of tube systems from an ink tank (if there is an intermediate tank, from the intermediate tank) to a nozzle ejection surface and members. That is, heat insulating and warming can be performed at a portion from the ink supply tank to the inkjet head.

A temperature control method is not particularly restricted, but for example, it is preferable that a plurality of temperature sensors be disposed at each tube portion so as to control heating depending on the flow rate of the ink composition and environmental temperature. The temperature sensor can be disposed in the ink supply tank and in the vicinity of nozzles of the inkjet head. Moreover, it is preferable that a head unit to be heated be thermally shielded or heat-insulated so as not to affect the apparatus body from the temperature of outer air. For the purpose of shorten the printer start-up time necessary for heating, or reducing the loss of heat energy, it is preferable that the heat insulating with other portions be performed and the heat capacity of the entire heating unit be made small.

It is preferable that the ejection of the ink composition be performed using the above-described inkjet recording apparatus after the ink composition is heated preferably at 25°C to 80°C, and more preferably at 25°C to 50°C, and then the viscosity of the ink composition is reduced preferably to 3 mPa·s to 15 mPa·s, and more preferably to 3 mPa·s to 13 mPa·s. Particularly, when the ink composition having the viscosity of 50 mPa·s or less at 25°C is used for the ink composition of the present invention, the ejection is performed, thereby being preferable. By using this method, high ejection stability can be realized.

The temperature of the ink composition is preferably constant, and the temperature control range of the ink composition is preferably preset temperature ± 5°C, more preferably preset temperature ± 2°C, and the most preferably preset temperature ± 1°C.

In present invention, a recording medium is not particularly limited, but a known recording medium as a supporting body or a recording material can be used. Examples of the recording medium include paper, paper laminated with plastic (for example, polyethylene, polypropylene, polystyrene or the like), a metal plate (for example, aluminum, zinc, copper or the like), a plastic film (for example, polychloride vinyl resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal or the like), and paper or a plastic film which are laminated or deposited with the above-described metal. Among these, paper or plastic-laminated paper is preferable.

(Drying step)

Next, the drying step of the present invention will be described.

In the drying step, an aqueous medium, which is contained in the ink composition applied onto a recording medium in the ink application step, is reduced. According to this, an image, which is formed by using the ink composition of the present invention, is fixed onto the recording medium.

In the drying step, at least a portion of the aqueous medium, which is contained in the ink composition ejected onto the recording medium, is evaporated by heating means, thereby preferably being reduced.

The heating means is not limited as long as it can dry the aqueous medium, but a heat drum, warm air, an infrared lamp, a thermal oven, heat plate heating or the like may be used.

The heating temperature is preferably 40°C or higher, more preferably about 40°C to 150°C, and still more preferably about 40°C to 80°C. Moreover, the heating temperature may be appropriately set depending on the chemical composition of the ink composition to be used and the printing speed.

[Printed article]

The printed article of the present invention may be recorded by the image forming method of the present invention. The printed article of the present invention is a printed article recorded by the image forming method of the present invention and thus the printed article has an image with an excellent blocking resistance.

[Examples]

Hereinafter, the present invention will be described in detail with reference to Examples, but the present invention is not limited to the Examples. Unless stated otherwise, "parts" and "%" are on a mass basis.

First, the detail of each component used in Examples and Comparative Examples will be described.

- Polymer particles -

Polymer particles A-1 to A-4 used in the present Examples are synthesized in the monomer composition ratio described in Table 1 below, and prepared as polymer particle dispersion A-1 to A-4 which are composed of specific copolymers (A'-1) to (A'-4) having the weight average molecular weight described in Table 1 below.

<Preparation of polymer particle dispersion A-1>

22 g of 2-butanone (manufactured by Wako Pure Chemical Industries) and 8.3 g of 2-propanol were put in a 200-ml three-neck flask purged with nitrogen gas, and were heated to 65°C. Then, 0.17 g of 2,2'-azobis(2,4-dimethylvaleronitrile) (V-65) was further added thereto. Thereafter, a mixture solution of 15 g of EHA, 75 g MMA, 10g of MAA, 0.28 g of 3-mercaptopropionic acid (manufactured by Tokyo Chemical Industry Co., Ltd.), 22 g of 2-butanone and 8.3 g of 2-propanol was added dropwise into the flask over two hours. After two-hour reaction, 0.09 parts of V-65 was added thereto and heated to 73°C. After another two-hour reaction, a solution PA-01 of 45% by mass of specific copolymer (A'-1) was synthesized.

A mixture solution of 3 g of the polymer solution PA-01 obtained as described above and 16 g of ethyl acetate was prepared and was mixed with a mixture solution of 18 g of water and 0.4 g of EMAL 20C (manufactured by Kao Corporation), which is separately prepared, followed by being emulsified and mixed using Homogenizer (manufactured by Nippon Seiki Co., Ltd.). Subsequently, the obtained emulsified liquid was heated at 45°C and concentrated to remove ethyl acetate, as a result of which polymer particle dispersion A-1 having a solid content concentration of 20% by mass was prepared.

<Preparation of polymer particle dispersions A-2 to A-4>

Specific copolymers (A'-2) to (A'-4) were synthesized in the same manner as in the preparation of the specific copolymer (A'-1), except that the monomer composition ratio used for synthesizing the specific copolymer (A'-1) in the preparation of the polymer particle dispersion A-1 was changed to the monomer composition ratios of the specific copolymers (A'-2) to (A'-4) described in Table 1 below. Thereafter, polymer particle dispersions A-2 to A-4 were prepared using the obtained specific copolymers (A'-2) to (A'-4) in the same manner as in the preparation of the polymer particle dispersion A-1.

**[Table 1]**

| Polymer particles | Specific copolymer | Monomer composition of specific copolymer | | | | | | Weight average molecula r weight |
|---|---|---|---|---|---|---|---|---|
| | | Kind of monomer | Content (% by mass) | Kind of monomer | Content (% by mass) | Kind of monomer | Content (% by mass) | |
| A-1 | A'-1 | EHA | 15 | MMA | 75 | MAA | 10 | 35,000 |
| A-2 | A'-2 | DMA | 20 | IBOMA | 68 | MAA | 12 | 50,000 |
| A-3 | A'-3 | BA | 21 | MA | 70 | AA | 9 | 25,000 |
| A-4 | A'-4 | EHA | 21 | St | 70 | MAA | 9 | 80,000 |

Abbreviations of the monomer described in Table 1 are detailed below.
- EHA:: 2-ethylhexyl acrylate
- MMA:: methyl methacrylate
- MAA:: methacrylic acid
- DMA:: n-decyl methacrylate
- IBOMA:: isobornyl methacrylate
- BA:: n-butyl acrylate
- MA:: methyl acrylate
- AA:: acrylic acid
- St:: styrene

The volume average particle size of the polymer particles A-1 measured by the Nanotrac LTPA-EX150 (manufactured by Nikkiso Co., Ltd.) was 200 nm, the volume average particle size of the polymer particles A-2 was 150 nm, the volume average particle size of the polymer particles A-3 was 200 nm, and the volume average particle size of the polymer particles A-4 was 200 nm.

-Specific polymer compounds -

<Synthesis Example 1: synthesis of specific polymer compound (P-1)>

A specific polymer compound (P-1) having a structure as described below was synthesized as follows.

44 g of methyl ethyl ketone was put in a 500-ml three-neck flask equipped with a stirrer and a condenser, and was heated to 72°C under nitrogen atmosphere. Then, a solution prepared by dissolving 0.43 g of dimethyl 2,2'-azobisisobutyrate, 44 g of monomer A-1 (structure as described below) and 6 g of acrylic acid in 25 g of methyl ethyl ketone was added dropwise into the flask over three hours. After the completion of the dropwise addition, the reaction was allowed to continue for another one hour. Thereafter, a solution prepared by dissolving 0.21 g of dimethyl 2,2'-azobisisobutyrate in 1 g of methyl ethyl ketone was added thereto, and the reaction liquid was heated at 78°C for four hours. The reaction solution obtained was reprecipitated twice with a large excess of hexane, and the precipitated resin was dried, as a result of which 43 g of the specific polymer compound (P-1) was obtained.

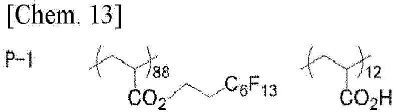

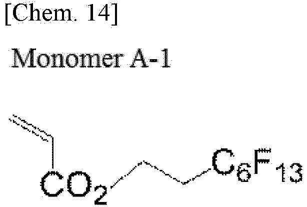

The weight average molecular weight (Mw) of the specific polymer compound (P-1) as measured by GPC was 45,000.

<Synthesis Example 2: synthesis of specific polymer compound (P-2)>

A specific polymer compound (P-2) having a structure as described below was synthesized as follows.

The specific polymer compound (P-2) was synthesized in the same manner as in the synthesis of the specific polymer compound (P-1), except that a monomer A-2 having the following structure (structure as described below) was used instead of the monomer A-1 in the preparation of the specific polymer compound (P-1).

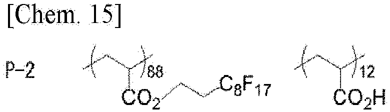

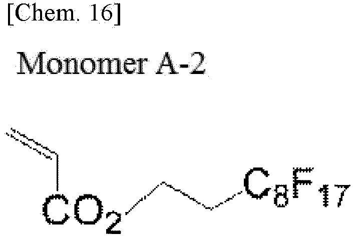

The weight average molecular weight (Mw) of the specific polymer compound (P-2) measured by GPC was 103,000.

<Synthesis Example 3: synthesis of specific polymer compound (P-3)>

A specific polymer compound (P-3) having a structure as described below was synthesized as follows.

The specific polymer compound (P-3) was synthesized in the same manner as in the synthesis of the specific polymer compound (P-1), except that a monomer A-3 (structure as described below) was used instead of the monomer A-1 in the preparation of the specific polymer compound (P-1).

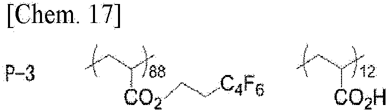

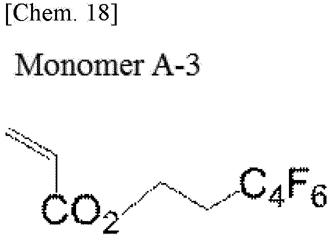

The weight average molecular weight (Mw) of the specific polymer compound (P-3) as measured by GPC was 9,000.

<Synthesis Example 4: synthesis of specific polymer compound (P-25)>

A specific polymer compound (P-25) having a structure as described below was synthesized as follows.

The specific polymer compound (P-25) was synthesized in the same manner as in the synthesis of the specific polymer compound (P-1), except that β-carboxyethyl acrylate (structure as described below) was used instead of acrylic acid in the preparation of the specific polymer compound (P-1).

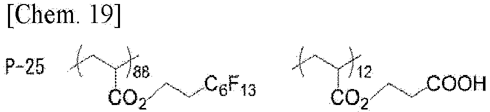

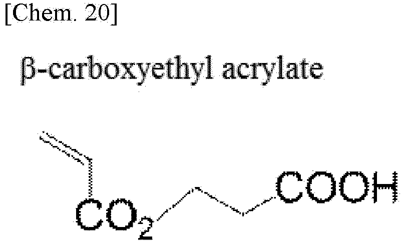

The weight average molecular weight (Mw) of the specific polymer compound (P-25) as measured by GPC was 32,000.

- Comparative compounds -

· Comparative compound 1:

Silicone oil "KF-96" (manufactured by Shin-Etsu Chemical Co., Ltd., kinetic viscosity 100 mm²/s)

· Comparative compound 2:

Polyether modified silicone "SILWET L-7604" (manufactured by Nippon Unicar Co., Ltd., kinetic viscosity 390 mm²/s, HLB = 13)

- Colorant (pigment dispersion) -

A resin-coated cyan pigment dispersion C (hereinafter, appropriately referred to as a "dispersion C") used as a colorant was prepared as follows.

<Synthesis of polymer dispersant E-1>

44 g of methyl ethyl ketone was put in a 500-ml three-neck flask equipped with a stirrer and a condenser, and was heated to 72°C under nitrogen atmosphere. Then, a solution prepared by dissolving 0.43 g of dimethyl 2,2'-azobisisobutyrate, 30 g of benzyl methacrylate, 5 g of methacrylic acid and 15 g of methyl methacrylate in 25 g of methyl ethyl ketone was added dropwise into the flask over three hours. After the completion of the dropwise addition, the reaction was allowed to continue for another one hour. Thereafter, a solution prepared by dissolving 0.21 g of dimethyl 2,2'-azobisisobutyrate in 1 g of methyl ethyl ketone was added thereto, and the reaction liquid was heated at 78°C for four hours. The reaction solution obtained was reprecipitated twice with a large excess of hexane, and the precipitated resin was dried, as a result of which 43 g of polymer dispersant E-1 was obtained.

The composition of the resin obtained was confirmed by 1H-NMR, and the weight average molecular weight (Mw) of the resin as measured by GPC was 42,000. The acid value of the resin as measured by the method described in the JIS standard (JIS K0070:1992) was 65.4 mg KOH/g.

<Preparation of resin-coated cyan pigment dispersion C>

10 parts of Pigment Blue 15:3 (PHTHALOCYANINE BLUE A220, manufactured by Dainichiseika Color & Chemicals Mfg. Co., Ltd.), 5 parts of the polymer dispersant E-1, 42 parts of methyl ethyl ketone, 5.5 parts of 1 mol/L NaOH aqueous solution and 87.2 parts of ion exchanged water were mixed, and the mixture was dispersed by a bead mill using zirconia beads having a diameter of 0.1 mm for 2 to 6 hours.

The methyl ethyl ketone and part of the water were removed from the resultant dispersion under reduced pressure at 55°C, as a result of which a dispersion C of a resin-coated cyan pigment having a pigment concentration of 10.2% by mass was obtained.

- Water-soluble organic solvent -

· 2-pyrrolidone (manufactured by Sigma-Aldrich Co. LLC.)

- Surfactant -

· Fluoro-based surfactant (trade name: ZONYL FSN, manufactured by Aldrich)

[Examples 1 to 24, Comparative Examples 1 to 4]

<Preparation of ink composition>

The dispersion C, polymer particles, a specific polymer compound or a comparative compound, a surfactant, water and a water-soluble organic solvent (aqueous medium) were mixed and stirred at 2,500 rpm using a mixer (L4R, manufactured by Silverson) so as to be the composition described in Table 2 below, as a result of which coarse ink compositions were prepared respectively. Each coarse ink composition obtained was packed in a plastic disposable syringe, and filtered through a polyvinylidene fluoride (PVDF) filter with a hole diameter of 5 µm (Millex-SV manufactured by Millipore Corporation, diameter: 25 mm), as a result of which ink compositions of Examples 1 to 24 and Comparative Examples 1 to 4, which are finished products, were obtained.

**[Table 2]**

| | Polymer particles | | | Specific polymer compound or Comparative compound | | Colorant | | Aqueous medium | | | Surfactant | | Evaluation | |
|---|---|---|---|---|---|---|---|---|---|---|---|---|---|---|
| | | | | | | | | Water-soluble organic solvent | | Water | | | | |
| | Type | Particle diameter (nm) | Used amount (% by mass) | Type | Used amount (% by mass) | Type | Used amount (% by mass) | Type | Used amount (% by mass) | Used amount (% by mass) | Type | Used amount (% by mass) | Evaluation (1) (time-course blocking resistance evaluation) | Evaluation (2) (press blocking resistance evaluation) |
| Example 1 | A-1 | 200 | 5 | P-1 | 0.1 | Dispersion C | 2 | 2-pyrrolidone | 20 | 71.9 | ZONYL FSN | 1 | C | B |
| Example 2 | A-1 | 200 | 5 | P-1 | 0.5 | Dispersion C | 2 | 2-pyrrolidone | 20 | 71.5 | ZONYL FSN | 1 | C | B |
| Example 3 | A-1 | 200 | 5 | P-1 | 1 | Dispersion C | 2 | 2-pyrrolidone | 20 | 71 | ZONYL FSN | 1 | B | A |
| Example 4 | A-1 | 200 | 5 | P-1 | 1.5 | Dispersion C | 2 | 2-pyrrolidone | 20 | 70.5 | ZONYL FSN | 1 | A | A |
| Example 5 | A-1 | 200 | 5 | P-1 | 5 | Dispersion C | 2 | 2-pyrrolidone | 20 | 67 | ZONYL FSN | 1 | A | A |
| Example 6 | A-1 | 200 | 5 | P-1 | 10 | Dispersion C | 2 | 2-pyrrolidone | 20 | 62 | ZONYL FSN | 1 | B | B |
| Example 7 | A-1 | 200 | 5 | P-2 | 1.5 | Dispersion C | 2 | 2-pyrrolidone | 20 | 70.5 | ZONYL FSN | 1 | A | A |
| Example 8 | A-1 | 200 | 5 | P-2 | 5 | Dispersion C | 2 | 2-pyrrolidone | 20 | 67 | ZONYL FSN | 1 | A | A |
| Example 9 | A-1 | 200 | 5 | P-2 | 1.5 | - | - | 2-pyrrolidone | 20 | 72.5 | ZONYL FSN | 1 | A | A |
| Example 10 | A-1 | 200 | 5 | P-3 | 1.5 | Dispersion C | 2 | 2-pyrrolidone | 20 | 70.5 | ZONYL FSN | 1 | A | A |
| Example 11 | A-1 | 200 | 5 | P-3 | 5 | Dispersion C | 2 | 2-pyrrolidone | 20 | 67 | ZONYL FSN | 1 | A | A |
| Example 12 | A-1 | 200 | 5 | P-3 | 1.5 | - | - | 2-pyrrolidone | 20 | 72.5 | ZONYL FSN | 1 | A | A |
| Example 13 | A-2 | 150 | 5 | P-1 | 1 | Dispersion C | 2 | 2-pyrrolidone | 20 | 71 | ZONYL FSN | 1 | A | B |
| Example 14 | A-3 | 200 | 5 | P-1 | 1.5 | Dispersion C | 2 | 2-pyrrolidone | 20 | 70.5 | ZONYL FSN | 1 | A | A |
| Example | A-1 | 200 | 3 | P-1 | 1.5 | Dispersion C | 2 | 2-pyrrolidone | 20 | 72.5 | ZONYL | 1 | A | A |
| 15 | | | | | | | | | | | FSN | | | |
| Example 16 | A-1 | 200 | 10 | P-1 | 1.5 | Dispersion C | 2 | 2-pyrrolidone | 20 | 65.5 | ZONYL FSN | 1 | A | A |
| Example 17 | A-1 | 200 | 15 | P-1 | 1.5 | Dispersion C | 2 | 2-pyrrolidone | 20 | 60.5 | ZONYL FSN | 1 | A | A |
| Example 18 | A-1 | 200 | 5 | P-25 | 1.5 | Dispersion C | 2 | 2-pyrrolidone | 20 | 70.5 | ZONYL FSN | 1 | A | A |
| Example 19 | A-1 | 200 | 5 | P-25 | 5 | Dispersion C | 2 | 2-pyrrolidone | 20 | 67 | ZONYL FSN | 1 | A | A |
| Example 20 | A-1 | 200 | 5 | P-25 | 1.5 | - | - | 2-pyrrolidone | 20 | 72.5 | ZONYL FSN | 1 | A | A |
| Example 21 | A-4 | 200 | 5 | P-1 | 1 | Dispersion C | 2 | 2-pyrrolidone | 20 | 71 | ZONYL FSN | 1 | A | A |
| Example 22 | A-4 | 200 | 5 | P-2 | 1.5 | Dispersion C | 2 | 2-pyrrolidone | 20 | 70.5 | ZONYL FSN | 1 | A | A |
| Example 23 | A-4 | 200 | 5 | P-3 | 1.5 | Dispersion C | 2 | 2-pyrrolidone | 20 | 70.5 | ZONYL FSN | 1 | A | A |
| Example 24 | A-4 | 200 | 5 | P-25 | 2 | Dispersion C | 2 | 2-pyrrolidone | 20 | 70 | ZONYL FSN | 1 | A | A |
| Comparativ e Example 1 | A-1 | 200 | 5 | - | - | Dispersion C | 2 | 2-pyrrolidone | 20 | 72 | ZONYL FSN | 1 | D | D |
| Comparativ e Example 2 | A-1 | 200 | 5 | P-1 | 20 | Dispersion C | 2 | 2-pyrrolidone | 20 | 52 | ZONYL FSN | 1 | D | D |
| Comparativ e Example 3 | A-1 | 200 | 5 | Com parat ive com poun d1 | 1.5 | Dispersion C | 2 | 2-pyrrolidone | 20 | 70.5 | ZONYL FSN | 1 | D | D |
| Comparativ e Example 4 | A-1 | 200 | 5 | Com parat ive com poun d2 | 1.5 | Dispersion C | 2 | 2-pyrrolidone | 20 | 70.5 | ZONYL FSN | 1 | D | D |

<Formation of ink image>

"OK Top Coat +" manufactured by Oji Paper Co., Ltd. was fixed on a stage capable of moving at 500 mm/sec. Then, a solid image was printed with a printer head (GELJET GX5000, manufactured by Ricoh) which had been arranged and fixed aslant with respect to a scanning direction (75.5 degree) in a line system at a resolution degree of 1200 dpi x 1200 dpi and a droplet ejection amount of 2.4 pL, using the ink compositions of respective Examples and Comparative Examples. Immediately after printing, the image was dried at 60°C for 3 seconds. Thereafter, the image formed by applying the ink composition was heated and fixed using a silicon rubber roller (degree of hardness: 50°, nip width: 5 mm), under the conditions below. According to this, a printed article with an image formed onto a recording medium was obtained.

- Conditions of heating and fixation -

Roller temperature: 90°C

Pressure: 0.8 MPa

The printed article obtained as described above was used for an evaluation sample and the blocking resistance evaluation described below was performed. The results thereof are shown in Table 2.

<Evaluation>

1. Evaluation (1): time-course blocking resistance evaluation

The evaluation sample was cut into two sheets each having a size of 3.5 cm x 4 cm, and two sheets thereof placed on an acrylic plate having a size of 10 cm x 10 cm in such a manner that printed surfaces thereof were overlapped with one another so as to face each other. Moreover, on the evaluation sample were placed 10 sheets of coated and non-printed paper "OK Top Coat" (manufactured by Oji Paper Co., Ltd., basis weight: 104.7 g/m²) cut into the same size as the evaluation sample and further thereon was placed another acrylic plate having a size of 10 cm x 10 cm. This was allowed to stand for 12 hours under the environment condition of 60°C and 30%RH

Thereafter, 1 kg balance weight was placed on the topmost acrylic plate, and allowed to stand for another 24 hours under the condition of 60°C and 30%RH (corresponding to a load of 700 kg/m²).

Moreover, after this was stored for 2 hours under the environment condition of 25°C and 53%RH, the printed surfaces of the evaluation sample were peeled. The ease of peeling at this time and adhesion after peeling were visually observed, and evaluated according to the following evaluation criteria. A, B and C are a practically acceptable level.

- Evaluation criteria -

A: Adhesion is not seen on a printed surface at all.

B: Adhesion is not visually observed on a printed surface, but is observed through 50-times microscope and the surface of paper is seen.

C: A very slight degree of adhesion is visually seen on an image surface of printed surface.

D: Adhesion occurs on a printed surface, and images come into contact with one another. Peeling is visually observed on either of images.

2. Evaluation (2): press blocking resistance evaluation

Adhesion and transfer between the printed surfaces due to a pressure applied at the cutting process of the printed article were assumed. Thereafter, the two sheets of the obtained evaluation sample were overlapped so that the printed surfaces thereof faced each other, and thereon was applied a load of 100N, 500N and 1000N for 10 seconds, respectively. The evaluation sample after applying a load was peeled. Then, degrees of ink adhesion and transfer with respect to the printed surfaces were visually observed, and evaluated according to the following evaluation criteria. A and B are a practically acceptable level.

- Evaluation criteria -

A: Adhesion and transfer are not seen on a printed surface at all.

B: A very slight degree of adhesion and transfer are seen on a printed surface.

C: Adhesion and transfer are seen at about several percent area of printed surface.

D: Adhesion and transfer are seen at 10% or more area of printed surface.

As shown in Table 2, it was found that an image formed using each ink composition of Examples has an excellent blocking resistance.

On the other hand, with respect to Comparative Example 1 having no specific polymer compound, Comparative Example 2 in which the content of the specific polymer compound is out of the range according to the present invention, and Comparative Examples 3 and 4 using a comparative compound other than the specific polymer compound, the blocking resistance of all Comparative Examples was at a practically problematic level.

## Claims

1. An inkjet ink composition comprising:
an aqueous medium;
polymer particles; and
a polymer compound which contains a fluorine-substituted hydrocarbon group and has a weight average molecular weight of 2,000 to 200,000,
wherein the content of the polymer compound is 0.1% by mass to 10% by mass, based on the total mass of the ink composition.

2. The inkjet ink composition according to Claim 1,
wherein the fluorine-substituted hydrocarbon group in the polymer compound is a fluoroalkyl or perfluoroalkyl group having 1 to 20 carbon atoms.

3. The inkjet ink composition according to Claim 1 or 2,
wherein the polymer compound contains a repeating unit derived from a monomer represented by the general formula (1) below, 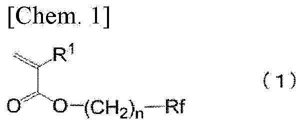 in the general formula (1), Rf represents a fluoroalkyl or perfluoroalkyl group having 2 to 20 carbon atoms, n represents 1 or 2 and R¹ represents a hydrogen atom or a methyl group.

4. The inkjet ink composition according to any one of Claims 1 to 3,
wherein the polymer compound contains a repeating unit derived from a monomer having at least one kind of hydrophilic groups selected from -CO₂H, -CO₂⁻, -CONH2, -SO₂OH, -SO₂O⁻, -PO₃H, -P(O)(OH)(O⁻), -P(O)(O⁻)₂, -OH and -NH3⁺.

5. The inkjet ink composition according to any one of Claims 1 to 4,
wherein the polymer compound contains a repeating unit derived from a monomer represented by the general formula (2) below, 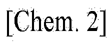 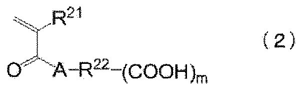 in the general formula (2), R²¹ represents a hydrogen atom or a methyl group, R²² represents an (m+1)-valent hydrocarbon group including an aliphatic ring structure having 3 to 30 carbon atoms which may have a substituent, and one or more arbitrary carbon atoms in the hydrocarbon group may be substituted with a hetero atom selected from a nitrogen atom, an oxygen atom and a sulfur atom, or -C(=O)-; A represents an oxygen atom or -NR²³-, R²³ represents a hydrogen atom or a monovalent hydrocarbon group having 1 to 10 carbon atoms, and m represents an integer of 1 to 5.

6. The inkjet ink composition according to any one of Claims 1 to 5, further comprising a colorant.

7. An image forming method comprising:
an ink application step of applying the ink composition according to any one of Claims 1 to 6 onto a recording medium; and
a drying step of reducing an aqueous medium which is contained in the ink composition applied onto the recording medium.

8. A printed article comprising an image which is formed on a recording medium by the ink composition according to any one of Claims 1 to 6.

9. A printed article comprising an image which is formed on a recording medium by the image forming method according to Claim 7.
